# EUROPEAN PATENT SPECIFICATION

(11) **EP 4 500 262 B1**
(45) Date of publication and mention of the grant of the patent: **06.05.2026**
(21) Application number: 23718119.3
(22) Date of filing: 23.03.2023
(51) Int. Cl.: G02B 27/01

(54) **ACCOMMODATION INTEGRATED FOLDING LENS ASSEMBLY**
AKKOMMODATIONSINTEGRIERTE FALTLINSENANORDNUNG
ENSEMBLE LENTILLE PLIABLE INTÉGRÉ DE RÉCEPTION

(30) Priority: 24.03.2022 US 202263323489 P; 10.02.2023 US 202318167680
(43) Date of publication of application: 05.02.2025
(73) Proprietor: META PLATFORMS TECHNOLOGIES, LLC, Menlo Park, CA 94025 (US)
(72) Inventor: CHENG, Hsien-Hui, Menlo Park, California 94025 (US); LU, Lu, Menlo Park, California 94025 (US); WANG, Xuan, Menlo Park, California 94025 (US)
(74) Representative: Murgitroyd & Company
(86) International application number: PCT/US2023/016123
(87) International publication number: WO 2023/183513

(56) References cited:
- WO-A2-96/08736
- US-A1- 2021 173 134
- US-B2- 11 243 397

## Description

### TECHNICAL FIELD

The present disclosure generally relates to optical devices and, more specifically, to an accommodation integrated folding lens assembly.

### BACKGROUND

An artificial reality system, such as a head-mounted display ("HMD") or heads-up display ("HUD") system, generally includes a near-eye display ("NED") system in the form of a headset or a pair of glasses. The NED system may be configured to present content to a user via an electronic or optic display disposed, for example, about 10-20 mm in front of the eyes of a user. The NED system may display virtual objects or combine images of real objects with virtual objects, as in virtual reality ("VR"), augmented reality ("AR"), or mixed reality ("MR") applications. It is often desirable to make NEDs that are compact and light-weight, and have a high resolution, a large field of view ("FOV"), and a small form factor. A NED may include a light source (e.g., a display element) configured to generate an image light, and a lens assembly configured to direct the image light towards eyes of the user. To achieve a compact size and light weight while maintaining satisfactory optical characteristics, the lens assembly may be designed to fold the optical path from the display element to the eye.

US 11,243,397 B2 describes an optical assembly that includes a partial reflector that is optically coupled with a first polarization volume holographic element. The partial reflector is capable of receiving first light having a first circular polarization and transmitting a portion of the first light having a first circular polarization. The first polarization volume holographic element is configured to receive the first portion of the first light and reflect the first portion of the first light as second light having the first circular polarization. The partial reflector is capable of receiving the second light and reflecting a first portion of the second light as third light having a second circular polarization opposite to the first polarization. The first polarization volume holographic element is configured to receive the third light having the second circular polarization and transmit the third light having the second circular polarization.

### SUMMARY

According to a first aspect of the present disclosure there is provided a device comprising: a display element; a lens assembly coupled with the display element and comprising: a first polarization selective reflector and a second polarization selective reflector each configured to be switchable between operating in an active state and operating in a non-active state; and a polarization non-selective partial reflector disposed between the first polarization selective reflector and the second polarization selective reflector; and a controller configured to: control, during a first time period, the display element to display a first virtual object, the first polarization selective reflector to operate in the active state, and the second polarization selective reflector to operate in the non-active state; and control, during a second time period, the display element to display a second virtual object, the first polarization selective reflector to operate in the non-active state, and the second polarization selective reflector to operate in the active state.

**In** some embodiments, the first time period and the second time period may be a first sub-frame and a second sub-frame of a same display frame of the display element, respectively.

**In** some embodiments, the first virtual object and the second virtual object may be associated with a first vergence distance and a second vergence distance, respectively, the first vergence distance may be different from the second vergence distance.

**In** some embodiments, during the first time period, the lens assembly may be configured to form a first image of the first virtual object displayed on the display element at a first image plane associated with a first accommodation distance, and during the second time period, the lens assembly may be configured to form a second image of the second virtual object displayed on the display element at a second image plane associated with a second accommodation distance, the second accommodation distance may be different from the first accommodation distance.

**In** some embodiments, the first accommodation distance may be substantially equal to the first vergence distance, and the second accommodation distance may be substantially equal to the second vergence distance.

**In** some embodiments, at least one of the first polarization selective reflector or the second polarization selective reflector may include a reflective polarization volume hologram ("PVH") element or a cholesteric liquid crystal ("CLC") element.

**In** some embodiments, the first polarization selective reflector and the second polarization selective reflector may be configured with at least one of different optical powers or different axial distances to the polarization non-selective partial reflector.

**In** some embodiments, the first polarization selective reflector operating in the active state may be configured to reflect an input light having a first polarization, and transmit an input light having a second polarization that may be orthogonal to the first polarization, and the second polarization selective reflector operating in the active state may be configured to reflect an input light having the second polarization, and transmit an input light having the first polarization.

In some embodiments, each of the first polarization selective reflector operating in the non-active state and the second polarization selective reflector operating in the non-active state may be configured to transmit an input light independent of a polarization of the input light.

In some embodiments, the lens assembly may further comprise: a first polarizer disposed between the first polarization selective reflector and the display element; and a second polarizer, the second polarization selective reflector being disposed between the polarization non-selective partial reflector and the second polarizer, wherein the first polarizer and the second polarizer may be configured to block input lights having orthogonal polarizations.

In some embodiments, the lens assembly may further comprise a transmissive lens configured to converge an image light received from the second polarization selective reflector, and the second polarization selective reflector may be disposed between the polarization non-selective partial reflector and the transmissive lens.

In some embodiments, during the first time period: the first polarization selective reflector operating in the active state may be configured to transmit a first image light having a first polarization toward the polarization non-selective partial reflector, the first image light forming the first virtual object; the polarization non-selective partial reflector may be configured to reflect a first portion of the first image light back to the first polarization selective reflector as a second image light having a second polarization that is orthogonal to the first polarization; the first polarization selective reflector operating in the active state may be configured to reflect the second image light back to the polarization non-selective partial reflector as a third image light having the second polarization; the polarization non-selective partial reflector may be configured to transmit a portion of the third image light as a fourth image light having the second polarization toward the second polarization selective reflector; and the second polarization selective reflector operating in the non-active state may be configured to transmit the fourth image light having the second polarization.

In some embodiments, during the second time period: the first polarization selective reflector operating in the non-active state may be configured to transmit a fifth image light having the first polarization toward the polarization non-selective partial reflector, the fifth image light forming the second virtual object; the polarization non-selective partial reflector may be configured to transmit a portion of the fifth image light as a sixth image light having the first polarization toward the second polarization selective reflector; the second polarization selective reflector operating in the active state may be configured to reflect the sixth image light back to the polarization non-selective partial reflector as a seventh image light having the first polarization; the polarization non-selective partial reflector may be configured to reflect a portion of the seventh image light back to the second polarization selective reflector as an eighth image light having the second polarization; and the second polarization selective reflector operating in the active state may be configured to transmit the eighth image light having the second polarization.

According to a second aspect of the present disclosure there is provided a method comprising: during a first time period, controlling, by a controller, a display element to display a first virtual object, a first polarization selective reflector disposed at a first side of a polarization non-selective partial reflector facing the display element to operate in an active state, and a second polarization selective reflector disposed at a second side of the polarization non-selective partial reflector to operate in a non-active state; and during a second time period, controlling, by the controller, the display element to display a second virtual object, the first polarization selective reflector to operate in the non-active state, and the second polarization selective reflector to operate in the active state.

In some embodiments, the first time period and the second time period may be a first sub-frame and a second sub-frame of a same display frame of the display element, respectively.

In some embodiments, the first virtual object and the second virtual object may be associated with a first vergence distance and a second vergence distance, respectively, and the first vergence distance may be different from the second vergence distance.

In some embodiments, a combination of the first polarization selective reflector, the second polarization selective reflector, and the polarization non-selective partial reflector disposed between the first polarization selective reflector and the second polarization selective reflector may form a lens assembly, and wherein the method may further comprise: during the first time period, forming, by the lens assembly, a first image of the first virtual object displayed on the display element at a first image plane associated with a first accommodation distance that is substantially equal to the first vergence distance; and during the second time period, forming, by the lens assembly, a second image of the second virtual object displayed on the display element at a second image plane associated with a second accommodation distance that is substantially equal to the second vergence distance.

In some embodiments, at least one of the first polarization selective reflector or the second polarization selective reflector may include a reflective polarization volume hologram ("PVH") element or a cholesteric liquid crystal ("CLC") element.

In some embodiments, the first polarization selective reflector and the second polarization selective reflector may be configured with at least one of different optical powers or different axial distances to the polarization non-selective partial reflector.

In some embodiments, the method may further comprise: during the first time period, controlling, by the controller, the display element to output a first image light forming the first virtual object; controlling, by the controller, the first polarization selective reflector to operate in the active state to transmit the first image light having a first polarization toward the polarization non-selective partial reflector; reflecting, by the polarization non-selective partial reflector, a first portion of the first image light back to the first polarization selective reflector as a second image light having a second polarization that is orthogonal to the first polarization; controlling, by the controller, the first polarization selective reflector to operate in the active state to reflect the second image light back to the polarization non-selective partial reflector as a third image light having the second polarization; transmitting, by the polarization non-selective partial reflector, a portion of the third image light as a fourth image light having the second polarization toward the second polarization selective reflector; and controlling, by the controller, the second polarization selective reflector to operate in the non-active state to transmit the fourth image light; and during the second time period, controlling, by the controller, the display element to output a fifth image light forming the second virtual object; controlling, by the controller, the first polarization selective reflector to operate in the non-active state to transmit the fifth image light having the first polarization toward the polarization non-selective partial reflector; transmitting, by the polarization non-selective partial reflector, a portion of the fifth image light as a sixth image light having the first polarization toward the second polarization selective reflector; controlling, by the controller, the second polarization selective reflector to operate in the active state to reflect the sixth image light back to the polarization non-selective partial reflector as a seventh image light having the first polarization; reflecting, by the polarization non-selective partial reflector, a portion of the seventh image light back to the second polarization selective reflector as an eighth image light having the second polarization; and controlling, by the controller, the second polarization selective reflector to operate in the active state to transmit the eighth image light.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

The following drawings are provided for illustrative purposes according to various disclosed embodiments and are not intended to limit the scope of the present disclosure. In the drawings:
FIG. 1A schematically illustrates a relationship between a vergence distance and an accommodation distance in a real world;
FIG. 1B schematically illustrates a conflict between vergence and eye focal length in a conventional three-dimensional ("3D") display screen;
FIG. 2 schematically illustrates a diagram of a system, according to one or more embodiments of the present disclosure;
FIG. 3A illustrates an optical path of a first image light in the system shown in FIG. 2, according to one or more embodiments of the present disclosure;
FIG. 3B illustrates an optical path of a second image light in the system shown in FIG. 2, according to one or more embodiments of the present disclosure;
FIG. 3C illustrates a distant virtual object and a close virtual object displayed by a display element included in the system shown in FIG. 2 during a display frame, according to one or more embodiments of the present disclosure;
FIG. 3D illustrates the distant virtual object displayed by the display element shown in FIG. 3C during a first sub-frame of the display frame, according to one or more embodiments of the present disclosure;
FIG. 3E illustrates an accommodation of eyes of a user of the system for the distant virtual object shown in FIG. 3D during the first sub-frame of the display frame, according to one or more embodiments of the present disclosure;
FIG. 3F illustrates the close virtual object displayed by the display element shown in FIG. 3C during a second sub-frame of the display frame, according to one or more embodiments of the present disclosure;
FIG. 3G illustrates an accommodation of eyes of a user of the system for the close virtual object shown in FIG. 3F during the second sub-frame of the display frame, according to one or more embodiments of the present disclosure;
FIG. 4 is a flowchart illustrating a method for mitigating vergence-accommodation conflict, according to one or more embodiments of the present disclosure;
FIG. 5A schematically illustrates a diagram of a near-eye display ("NED"), according to one or more embodiments of the present disclosure;
FIG. 5B illustrates a schematic cross-sectional view of the NED shown in FIG. 5A, according to one or more embodiments of the present disclosure;
FIG. 6A illustrates a schematic three-dimensional ("3D") view of a polarization selective reflector, according to one or more embodiments of the present disclosure;
FIGs. 6B and 6C schematically illustrate in-plane orientations of optically anisotropic molecules in the polarization selective reflector shown in FIG. 6A, according to one or more embodiments of the present disclosure;
FIG. 6D schematically illustrates out-of-plane orientations of optically anisotropic molecules in the polarization selective reflector shown in FIG. 6A, according to one or more embodiments of the present disclosure;
FIG. 6E schematically illustrates diffraction and transmission of the polarization selective reflector shown in FIG. 6A, according to one or more embodiments of the present disclosure; and
FIG. 7 schematically illustrates a diagram of a system, according to one or more embodiments of the present disclosure.

### DETAILED DESCRIPTION

Embodiments consistent with the present disclosure will be described with reference to the accompanying drawings, which are merely examples for illustrative purposes and are not intended to limit the scope of the present disclosure. Wherever possible, the same reference numbers are used throughout the drawings to refer to the same or similar parts, and a detailed description thereof may be omitted.

Further, in the present disclosure, the disclosed embodiments and the features of the disclosed embodiments may be combined. Based on the disclosed embodiments, persons of ordinary skill in the art may derive other embodiments consistent with the present disclosure. For example, modifications, adaptations, substitutions, additions, or other variations may be made based on the disclosed embodiments. Accordingly, the present disclosure is not limited to the disclosed embodiments. Instead, the scope of the present disclosure is defined by the appended claims.

As used herein, the terms "couple," "coupled," "coupling," or the like may encompass an optical coupling, a mechanical coupling, an electrical coupling, an electromagnetic coupling, or any combination thereof. An "optical coupling" between two optical elements refers to a configuration in which the two optical elements are arranged in an optical series, and a light output from one optical element may be directly or indirectly received by the other optical element. An optical series refers to optical positioning of a plurality of optical elements in a light path, such that a light output from one optical element may be transmitted, reflected, diffracted, converted, modified, or otherwise processed or manipulated by one or more of other optical elements. In some embodiments, the sequence in which the plurality of optical elements are arranged may or may not affect an overall output of the plurality of optical elements. A coupling may be a direct coupling or an indirect coupling (e.g., coupling through an intermediate element).

When the first element is shown or described as being disposed or arranged "on" the second element, term "on" is merely used to indicate an example relative orientation between the first element and the second element. The description may be based on a reference coordinate system shown in a figure, or may be based on a current view or example configuration shown in a figure. For example, when a view shown in a figure is described, the first element may be described as being disposed "on" the second element. It is understood that the term "on" may not necessarily imply that the first element is over the second element in the vertical, gravitational direction. For example, when the assembly of the first element and the second element is turned 180 degrees, the first element may be "under" the second element (or the second element may be "on" the first element). Thus, it is understood that when a figure shows that the first element is "on" the second element, the configuration is merely an illustrative example. The first element may be disposed or arranged at any suitable orientation relative to the second element (e.g., over or above the second element, below or under the second element, left to the second element, right to the second element, behind the second element, in front of the second element, etc.).

When the first element is described as being disposed "on" the second element, the first element may be directly or indirectly disposed on the second element. The first element being directly disposed on the second element indicates that no additional element is disposed between the first element and the second element. The first element being indirectly disposed on the second element indicates that one or more additional elements are disposed between the first element and the second element.

The term "processor" used herein may encompass any suitable processor, such as a central processing unit ("CPU"), a graphics processing unit ("GPU"), an application-specific integrated circuit ("ASIC"), a programmable logic device ("PLD"), or any combination thereof. Other processors not listed above may also be used. A processor may be implemented as software, hardware, firmware, or any combination thereof.

The term "controller" may encompass any suitable electrical circuit, software, or processor configured to generate a control signal for controlling a device, a circuit, an optical element, etc. A "controller" may be implemented as software, hardware, firmware, or any combination thereof. For example, a controller may include a processor, or may be included as a part of a processor.

The term "orthogonal" as in "orthogonal polarizations" or the term "orthogonally" as in "orthogonally polarized" means that an inner product of two vectors representing the two polarizations is substantially zero. For example, two lights or beams with orthogonal polarizations (or two orthogonally polarized lights or beams) may be two linearly polarized lights (or beams) with two orthogonal polarization directions (e.g., an x-axis direction and a y-axis direction in a Cartesian coordinate system) or two circularly polarized lights with opposite handednesses (e.g., a left-handed circularly polarized light and a right-handed circularly polarized light).

The wavelength ranges, spectra, or bands mentioned in the present disclosure are for illustrative purposes. The disclosed optical device, system, element, assembly, and method may be applied to a visible wavelength band, as well as other wavelength bands, such as an ultraviolet ("UV") wavelength band, an infrared ("IR") wavelength band, or a combination thereof. The term "substantially" or "primarily" used to modify an optical response action, such as transmit, reflect, diffract, block or the like that describes processing of a light means that a major portion, including all, of a light is transmitted, reflected, diffracted, or blocked, etc. The major portion may be a predetermined percentage (greater than 50%) of the entire light, such as 100%, 98%, 90%, 85%, 80%, etc., which may be determined based on specific application needs.

The term "optic axis" refers to a direction in a crystal. A light propagating in the optic axis direction does not experience birefringence (or double refraction). An optic axis may be a direction rather than a single line: lights that are parallel to that direction may experience no birefringence.

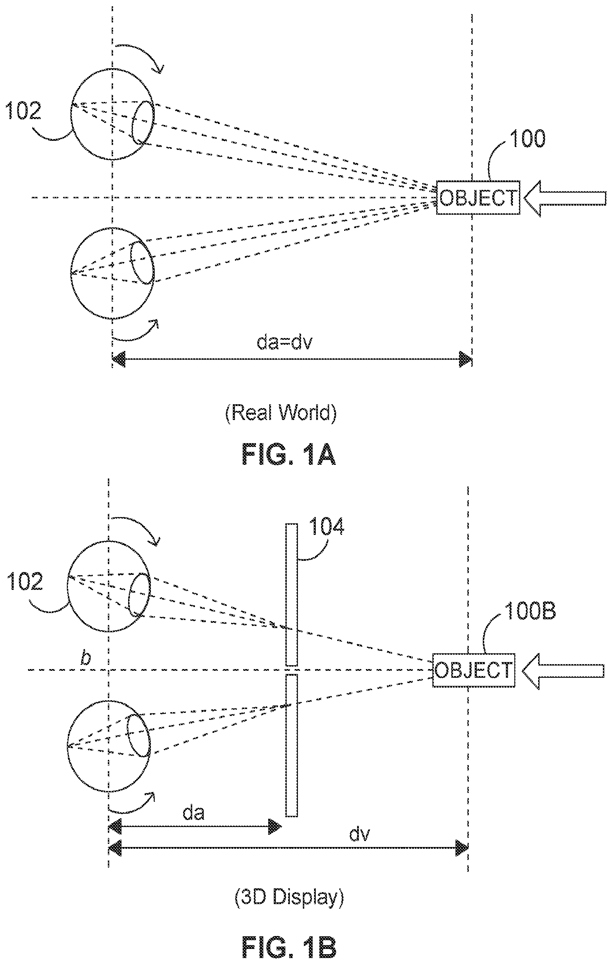

An artificial reality device often has a vergence-accommodation conflict issue. Vergence is the simultaneous movement or rotation of both eyes in opposite directions to obtain or maintain single binocular vision, and is related to accommodation of the eyes. In a real world, when human eyes look at real objects located at different distances (associated with different vergence distances), the eyes may automatically change focus (by changing the shapes of the crystalline lenses of the eyes) to provide accommodation at different vergence distances. FIG. 1A illustrates how human eyes experience vergence and accommodation in a real world. As shown in FIG. 1A, a user is looking at a real object 100 (i.e., eyes 102 of the user are verged on the real object 100 and gaze lines from the eyes 102 intersect at the real object 100). The distance to which the eyes 102 are verged on the real object 100 is referred to as a vergence distance (*dᵥ*). As the real object 100 is moved closer to the user, as indicated by the arrow in FIG. 1A, both of the eyes 102 rotate inwardly to stay verged on the real object 100, and the vergence distance (*dᵥ*) of the real object 100 is reduced. Meanwhile, each eye 102 accommodates for the shorter distance of the real object 100 by changing the shape of the crystalline lens to increase the optical power or reduce the focal length. The distance to which the eye 102 is focused to create a sharp retinal image is referred to as an accommodative distance (*dₐ*). Thus, under normal conditions in the real world, the vergence distance (*dᵥ*) is equal to the accommodative distance (*dₐ*).

FIG. 1B shows a conflict between vergence and accommodation for a conventional 3D display. As shown in FIG. 1B, a user is looking at a virtual object 100B displayed by a conventional electronic display (e.g., a 3D electronic display) 104. The eyes 102 of the user are verged on the virtual object 100B, and the gaze lines from the eyes 102 intersect at the virtual object 100B that has a greater distance from the eyes 102 than the electronic display 104. When the electronic display 104 renders the virtual object 100B to appear closer to the user, as indicated by the arrow in FIG. 1B, both of the eyes 102 rotate inwardly to stay verged on the virtual object 100B, and the vergence distance of the virtual object 100B is reduced. However, as the electronic display 104 is often positioned at a fixed distance from the eyes 102, each eye 102 may not accommodate for the closer distance of the virtual object 100B, and the shape of the crystalline lens of each eye 102 may be substantially maintained. Instead of increasing the optical power or reducing the focal length to accommodate for the closer vergence distance of the virtual object 100B, each eye 102 may maintain the accommodation at a fixed distance associated with the electronic display 104. Thus, the vergence distance (*dᵥ*) is not equal to the accommodative distance (*dₐ*) for the human eye for virtual objects displayed by a 3D electronic display. The discrepancy between vergence distance (*dᵥ*) and accommodative distance (*dₐ*) is referred to as "vergence-accommodation conflict." The vergence-accommodation conflict may become even worse when multiple virtual objects are rendered to appear at a wide range of distances to the user. The vergence-accommodation conflict may cause eye strain and headache, significantly degrading the visual experience of the user.

In view of the limitations in the conventional technologies, the present disclosure provides a path-folding lens assembly (or folding lens assembly) having an accommodation function. The disclosed path-folding lens assembly may be implemented into an artificial reality system in the form of eyeglasses, goggles, a helmet, a visor, or some other type of eyewear to mitigate the vergence-accommodation conflict, and improve the visual experience of the user. The disclosed path-folding lens assembly may also achieve a compact size and light weight while maintaining satisfactory optical characteristics.

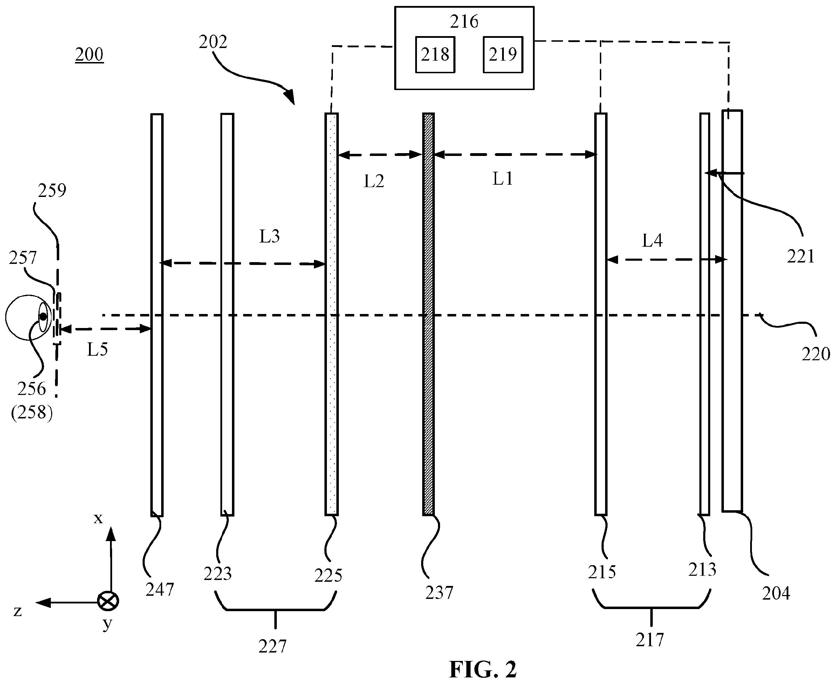

FIG. 2 schematically illustrates a diagram of a system 200, according to an embodiment of the present disclosure. In some embodiments, the system 200 may be a part of an NED. As shown in FIG. 2, the system 200 includes a display element 204. The system 200 includes a path-folding lens assembly 202 (also referred to as lens assembly 202) disposed between the display element 204 and an eye-box region 259 where an eye 256 of a user may be located. The lens assembly 202 may be configured to fold an optical path of an image light from the display element 204 to the eye-box region 259.

According to the invention, the system 200 includes a controller 216 configured to control the lens assembly 202 and the display element 204. The controller 216 may include a processor or processing unit 219. The processor 219 may by any suitable processor, such as a central processing unit ("CPU"), a graphic processing unit ("GPU"), etc. The controller 216 may include a storage device 218. The storage device 218 may be a non-transitory computer-readable medium, such as a memory, a hard disk, etc. The storage device 218 may be configured to store data or information, including computer-executable program instructions or codes, which may be executed by the processor 219 to perform various controls or functions described in the methods or processes disclosed herein.

The display element 204 is configured to output an image light 221 representing a virtual image (or a virtual object) toward the lens assembly 202. The lens assembly 202 may focus the image light 221 to propagate though one or more exit pupils 257 in the eye-box region 259. In some embodiments, each light outputting unit of the display element 204 may output a bundle of diverge rays (that is a portion of the image light 221), and the lens assembly 202 may be configured to convert the bundle of diverge rays to a bundle of parallel rays propagating through one or more exit pupils 257 in the eye-box region 259. In some embodiments, the bundle of parallel rays may substantially cover the entire eye-box region 259. For illustrative purposes, FIG. 2 shows a single ray of the image light 221 output from a light outputting unit at an upper portion of the display element 204. The exit pupil 257 may be a spatial zone where an eye pupil 258 of the eye 256 may be positioned in the eye-box region 259 to perceive the virtual image (or the virtual object).

For illustrative purposes, FIG. 2 shows a single display element 204 for a single eye 256 of the user. In some embodiments, the system 200 may include multiple display elements 204, such as two display elements 204 for both eyes of the user. The display element 204 may include a display panel, such as a liquid crystal display ("LCD") panel, a liquid-crystal-on-silicon ("LCoS") display panel, an organic light-emitting diode ("OLED") display panel, a micro organic light-emitting diode ("micro-OLED") display, a micro light-emitting diode ("micro-LED") display panel, a mini-LED display, a digital light processing ("DLP") display panel, a laser scanning display panel, or a combination thereof. In some embodiments, the display element 204 may include a self-emissive panel, such as an OLED display panel, a micro-OLED display panel, a micro-LED display panel, a mini-LED display panel, or a laser scanning display panel, etc. In some embodiments, the display element 204 may include a display panel that is illuminated by an external source, such as an LCD panel, an LCoS display panel, or a DLP display panel. Examples of an external source may include a laser, an LED, an OLED, or a combination thereof.

The lens assembly 202 may be configured to increase the length of an optical path of the image light 221 from the display element 204 to the exit pupil 257, by folding the optical path of the image light 221 one or multiple times. Due to the path folding, the lens assembly 202 may increase a field of view ("FOV") of the system 200 without increasing the physical distance between the display element 204 and the eye-box region 259, and without compromising the image quality. The lens assembly 202 may include a first optical component 217, a second optical component 227, and a third optical component 237 arranged in an optical series, with the third optical component 237 disposed between the first optical element 217 and the second optical element 227. At least one (e.g., each) of the first optical component 217 or the second optical component 227 may be configured as a reflective and polarization selective optical component with a lens function (i.e., configured with an optical power). For example, at least one (e.g., each) of the first optical component 217 or the second optical component 227 may include a single reflective and polarization selective optical element with a lens function (e.g., a single reflective and polarization selective lens). At least one (e.g., each) of the first optical component 217 or the second optical component 227 may include two individual optical elements respectively configured with a lens function and a polarization selective reflection function. For example, the optical element configured with a lens function (that may be polarization non-selective) may be an optical lens having an optical power, while the optical element configured with the polarization selective reflection function may have a zero optical power.

At least one (e.g., each) of the first optical component 217, the second optical component 227, or the third optical component 237 may include a reflector. A reflector may be polarization selective or polarization non-selective (i.e., polarization independent). According to the claimed invention, at least one (e.g., each) of the first optical component 217 and the second optical component 227 includes a polarization selective reflector, and the third optical component 237 includes a polarization non-selective reflector.

A polarization non-selective reflector reflects an input light independent of the polarization. An example of the polarization non-selective reflector is a polarization non-selective partial reflector. The polarization non-selective partial reflector may partially transmit a portion of an input light and partially reflect a portion of the input light, independent of the polarization of the input light. The polarization non-selective reflector may also be referred to as a "partial reflector" in the following descriptions. Examples of polarization non-selective partial reflectors may include a volume Bragg grating ("VBG"), a 50:50 mirror (transmitting 50% and reflecting 50%), etc. The polarization non-selective partial reflector may be configured with or without an optical power (or lens function). For the polarization non-selective reflector, the percentages of the input light for the transmitted portion and the reflected portion may be any suitable percentages, such as 10%/90%, 10%/80%, 30%/70%, 40%/60%, 50%/50%, etc.

A polarization selective reflector is configured to reflect an input light having a first polarization (e.g., a circular polarization, or linear polarization), and transmit an input light having a second polarization (e.g., an orthogonal circular polarization, or an orthogonal linear polarization) different from (e.g., orthogonal to) the first polarization. Examples of the polarization selective reflector may include a linear reflective polarizer, a circular reflective polarizer, etc. The polarization selective reflector may or may not be configured with an optical power (or lens function). When configured with an optical power, the polarization selective reflector may also function as a reflective lens to backwardly diverge or converge an input light having the first polarization, and transmit an input light having the second polarization while substantially maintaining the propagation direction of the input light.

In some embodiments, when the polarization selective reflector is configured with zero optical power, the polarization selective reflector may be coupled with an optical lens having an optical power to backwardly diverge or converge an input light having the first polarization, and transmit an input light having the second polarization while substantially maintaining the propagation direction of the input light. In other words, a combination of the polarization selective reflector configured with zero optical power and the optical lens having a non-zero optical power may function similarly to the polarization selective reflector with the optical power.

Each of the polarization selective reflector configured with an optical power, and the combination of the polarization selective reflector configured with zero optical power and the optical lens having an optical power may also be referred to as a reflective polarization selective lens. The term "reflective polarization selective lens" used in the present disclosure may include both of the polarization selective reflector configured with an optical power, and the combination of the polarization selective reflector configured with zero optical power and the optical lens having an optical power.

A reflective polarization volume hologram ("PVH") element based on self-organized cholesteric liquid crystals ("CLCs") is an example of a polarization selective reflector. A reflective PVH element based on self-organized CLCs may also be referred to as a slanted or patterned CLC element. A reflective PVH element with an optical power (also referred to as PVH lens) is an example of a reflective polarization selective lens. For discussion purposes, the reflective PVH lens may also be referred to as a slanted or patterned CLC lens. The reflective PVH lens may be narrowband (e.g., including a single CLC layer having a fixed helical pitch) or broadband (e.g., including a CLC layer having a gradient helical pitch, or a plurality of CLC layers having different helical pitches). The reflective PVH element described herein may be fabricated based on various methods, such as holographic interference, laser direct writing, ink-jet printing, 3D printing, or various other forms of lithography. Thus, a "hologram" described herein is not limited to fabrication by holographic interference, or "holography."

In the embodiment shown in FIG. 2, the third optical component 237 includes a polarization non-selective (i.e., independent) partial reflector, e.g., a 50:50 mirror. Thus, the third optical component 237 is also referred to as a mirror 237. In the embodiment shown in FIG. 2, at least one (e.g., each) of the first optical component 217 or the second optical component 227 may include a polarization selective reflector 215 or 225 configured with an optical power (or referred to as a reflective polarization selective lens 215 or 225). The polarization selective reflector 215 or 225 configured with an optical power may be a single element with both of the polarization selective reflection function and the lens function. The polarization selective reflector 215 may be referred to as a first polarization selective reflector 215, and the polarization selective reflector 225 may be referred to as a second polarization selective reflector 225.

The polarization selective reflector 215 or 225 may be an active polarization selective reflector that is switchable between operating in an active state (or an on-state) and operating in a non-active state (or an off-state), such as an active PVH element or an active CLC reflective polarizer including active liquid crystals that are reorientable via an externa field. The polarization selective reflector 215 or 225 operating in the active state may selectively reflect or transmit an input light depending on a polarization of the input light. The polarization selective reflector 215 or 225 operating in the non-active state may transmit an input light independent of the polarization of the input light. Thus, the polarization selective reflector 215 or 225 operating in the active state may have a polarization selective optical power (e.g., zero or non-zero optical power depending on the polarization of the input light), and polarization selective reflector 215 or 225 operating in the non-active state may have a zero optical power independent of the polarization of the input light. For example, the polarization selective reflector 215 or 225 may operate in the active state when an external voltage applied to the polarization selective reflector 215 or 225 is less than or equal to a first threshold value (e.g., when the voltage is zero), and may operate in the non-active state when the external voltage applied to the polarization selective reflector 215 or 225 is equal to or greater than a second threshold value (e.g., a voltage that is sufficiently high to reorientate all the liquid crystal molecules).

According to the invention, the controller 216 is communicatively coupled with the polarization selective reflector 215 or 225 to control an operation state of the polarization selective reflector 215 or 225. For example, the polarization selective reflector 215 or 225 may be electrically coupled with a power source (not shown). The controller 216 may control the output of the power source to control the electric field in the polarization selective reflector 215 or 225, thereby controlling the operation state of the polarization selective reflector 215 or 225.

In some embodiments, the polarization selective reflectors 215 and 225 may be configured with opposite polarization selectivities. For example, the first polarization selective reflector 215 operating in the active state may be configured to substantially reflect an input light having a first polarization (e.g., a right-handed circularly polarized ("RHCP") light), and substantially transmit an input light having a second polarization (e.g., a left-handed circularly polarized ("LHCP") light), which may be orthogonal to the first polarization. The first polarization selective reflector 215 operating in the active state may reflect and converge the input light having the first polarization (e.g., RHCP light), and substantially transmit the input light having the second polarization (e.g., LHCP light) while substantially maintaining the propagation direction of the input light. The first polarization selective reflector 215 operating in the non-active state may be configured to substantially transmit both of the input light having the first polarization (e.g., RHCP light) and the input light having the second polarization (e.g., LHCP light), while substantially maintaining the propagation directions of the respective input lights.

The second polarization selective reflector 225 operating in the active state may be configured to substantially reflect an input light having the second polarization (e.g., an LHCP light), and substantially transmit an input light having the first polarization (e.g., an RHCP) light). The second polarization selective reflector 225 operating in the active state may reflect and converge the input light having the second polarization (e.g., LHCP light), and substantially transmit the input light having the first polarization (e.g., RHCP light) while substantially maintaining the propagation direction of the input light. The second polarization selective reflector 225 operating in the non-active state may be configured to substantially transmit both of the input light having the first polarization (e.g., RHCP light) and the input light having the second polarization (e.g., LHCP light), while substantially maintaining the propagation directions of the respective input lights.

The optical power of the polarization selective reflector 215 or 225 may be fixed or adjustable. The first polarization selective reflector 215 and the second polarization selective reflector 225 may be configured to have at least one of different optical powers or different axial distances (e.g., L1 and L2) to the mirror 237 along an optical axis 220 of the system 200. For example, in some embodiments, the first polarization selective reflector 215 and the second polarization selective reflector 225 may be configured to have the same optical power, and different axial distances to the mirror 237. In some embodiments, the first polarization selective reflector 215 and the second polarization selective reflector 225 may be configured to have different optical powers, and the same axial distance to the mirror 237. In some embodiments, the first polarization selective reflector 215 and the second polarization selective reflector 225 may be configured to have different optical powers, and different axial distances to the mirror 237. For discussion purposes, FIG. 2 shows that the axial distance L1 of the first polarization selective reflector 215 to the mirror 237 is greater than the axial distance L2 of the second polarization selective reflector 225 to the mirror 237. In some embodiments, the axial distance L1 may be equal to or smaller than the axial distance L2. The display element 204 may be configured to have an axial distance of L4 to the first polarization selective reflector 215 along the optical axis 220.

In some embodiments, the first optical component 217 may also include a first polarizer 213 coupled with the first polarization selective reflector 215. The first polarizer 213 may be disposed between the first polarization selective reflector 215 and the display element 204. That is, the first polarizer 213 may be disposed at a side of the first polarization selective reflector 215 opposite to a side that faces the mirror 237. In some embodiments, the first polarizer 213 may be an absorptive polarizer configured to transmit an input light having the second polarization (e.g., LHCP light), and block, via absorption, an input light having the first polarization (e.g., RHCP light). In some embodiments, the display element 204 may be configured to output the image light 221 that is an unpolarized or linearly polarized image light. The first polarizer 213 may convert the image light 221 into a polarized image light having the second polarization, e.g., a circularly polarized image light having a second handedness (e.g., an LHCP light) propagating toward the first polarization selective reflector 215. In some embodiments, the first polarizer 213 may be omitted.

In some embodiments, the second optical component 227 may also include a second polarizer 223 coupled with the second polarization selective reflector 225. The second polarizer 223 may be disposed between the second polarization selective reflector 225 and the eye-box region 259. That is, the second polarizer 223 may be disposed at a side of the second polarization selective reflector 225 opposite to a side that faces the mirror 237. In some embodiments, the second polarizer 223 may be an absorptive polarizer configured to transmit an input light having the first polarization (e.g., RHCP light), and block, via absorption, an input light having the second polarization (e.g., LHCP light). The second polarizer 223 may be configured to block, via absorption, an image light having an undesirable polarization (e.g., the second polarization (e.g., left-handed circular polarization)), thereby reducing the ghost image and enhancing the image quality at the eye-box region 259. In other words, the second polarizer 223 may function as a "clean up" polarizer that removes, via absorption, an image light having the undesirable polarization. In some embodiments, the second polarizer 223 may be omitted.

In some embodiments, the lens assembly 202 may also include a fourth optical component 247 disposed between the eye-box region 259 and the second optical component 227. The second optical component 227 may be disposed between the fourth optical component 247 and the third optical component 237. The fourth optical component 247 may include a suitable transmissive lens (also referred to as 247 for discussion purposes) configured to converge the image light output from the second optical component 227. The transmissive lens 247 may have an axial distance of L3 to the second polarization selective reflector 225 along the optical axis 220 of the system 200. Thus, the transmissive lens 247 may have an axial distance of (L3+L2) to the mirror 237 along the optical axis 220 of the system 200. The eye-box region 259 may have an axial distance of L5 to the transmissive lens 247. The display element 204 may have a fixed axial distance to the eye-box region 259.

Examples of the transmissive lens 247 may include a conventional solid lens including at least one curved surface (e.g., a glass lens, a polymer lens, or a resin lens, etc.), a liquid lens, a liquid crystal lens, a Fresnel lens, a meta lens, a Pancharatnam-Berry Phase ("PBP") lens, a diffractive lens, a PVH lens, etc. The transmissive lens 247 may be configured with a fixed optical power or a tunable optical power. For discussion purposes, FIG. 2 shows that the transmissive lens 247 includes flat surfaces. In some embodiments, the transmissive lens 247 may include at least one curved surface.

Various elements included in the system 200 are shown in FIG. 2 as having flat surfaces for illustrative purposes. In some embodiments, one or more elements included in the system 200 may have a curved surface. For discussion purposes, FIG. 2 shows that the first polarizer 213 is spaced apart from the first polarization selective reflector 215 by a gap, and the second polarizer 223 is spaced apart from the second polarization selective reflector 225 by a gap. In some embodiments, the first polarizer 213 may be stacked with the first polarization selective reflector 215 without a gap (e.g., through direct contact). In some embodiments, the second polarizer 223 may be stacked with the second polarization selective reflector 225 without a gap (e.g., through direct contact). In some embodiments, the lens assembly 202 may include additional elements that are not shown in FIG 2. For example, in some embodiments, the lens assembly 202 may also include a third polarizer (e.g., a circular polarizer) disposed between the eye-box region 259 and the transmissive lens 247 to suppress the reflection from the eye 256.

The lens assembly 202 may be integrated with an accommodation function to mitigate the vergence-accommodation conflict in the system 200. For the eyes 256 placed at the exit pupil 257 within the eye-box region 259, the lens assembly 202 may image the display element 204 to multiple image planes (or form images of the display element 204 at multiple image planes) associated with different accommodation distances, thereby providing the accommodation function to mitigate the vergence-accommodation conflict in the system 200. In the disclosed embodiments, during an operation of the system 200, the controller 216 may control the first polarization selective reflector 215 and the second polarization selective reflector 225 to operate in different operation states. For example, the controller 216 may control one of the first polarization selective reflector 215 and the second polarization selective reflector 225 to operate in the active state, and control the other one of the first polarization selective reflector 215 and the second polarization selective reflector 225 to operate in the non-active state.

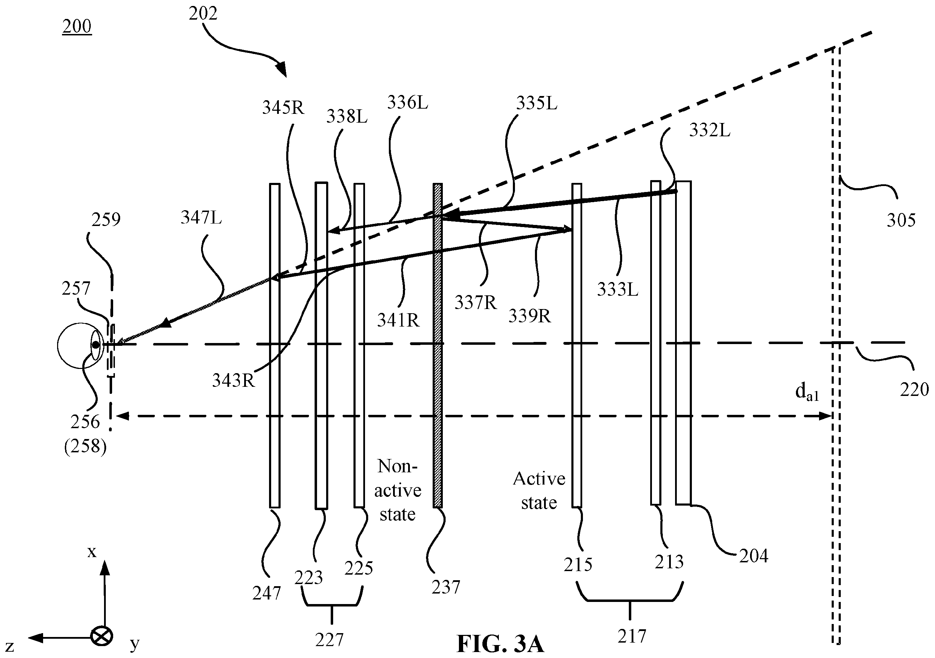

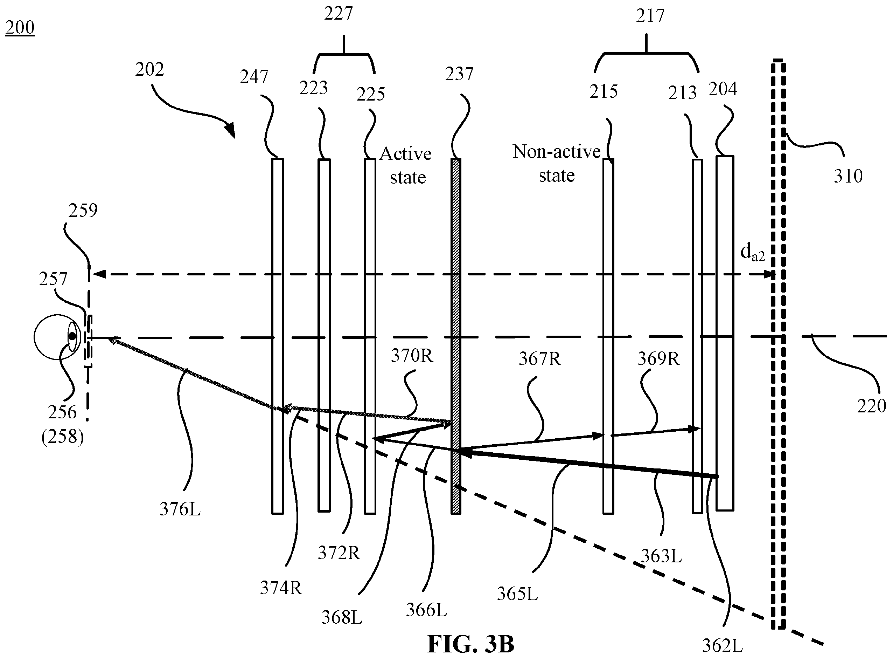

FIG. 3A illustrates an x-z sectional view of an optical path of an image light output from the display element 204 in the system 200 shown in FIG. 2, according to an embodiment of the present disclosure. In FIG. 3A, the controller 216 may control the first polarization selective reflector 215 to operate in the active state, and control the second polarization selective reflector 225 to operate in the non-active state. FIG. 3B illustrates an x-z sectional view of an optical path of an image light output from the display element 204 in the system 200 shown in FIG. 2, according to an embodiment of the present disclosure. In FIG. 3B, the controller 216 may control the first polarization selective reflector 215 to operate in the non-active state, and control the second polarization selective reflector 225 to operate in the active state. In the figures, the letter "R" appended to a reference number (e.g., "337R") denotes a right-handed circularly polarized ("RHCP") light, and the letter "L" appended to a reference number (e.g., "332L") denotes a left-handed circularly polarized ("LHCP") light.

For discussion purposes, in FIGs. 3A and 3B, the first polarization selective reflector 215 may be a right-handed PVH or CLC lens, and the second polarization selective reflector 225 may be a left-handed PVH or CLC lens. For discussion purposes, the first polarization selective reflector 215 operating in the active state may reflect and converge an RHCP light, and transmit an LHCP light while maintaining the propagation direction of the LHCP light. The polarization selective reflector 225 operating in the active state may reflect and converge an LHCP light, and transmit an RHCP light while maintaining the propagation direction of the RHCP light. For discussion purposes, the transmissive lens 247 may be a right-handed PBP lens configured to converge an RHCP light and diverge an LHCP light, the display element 204 may output an LHCP image light, the first polarizer 213 may transmit an LHCP light and block an RHCP light, and the second polarizer 223 may transmit an RHCP light and block an LHCP light.

In FIG. 3A, as the controller 216 controls the first polarization selective reflector 215 to operate in the active state and the second polarization selective reflector 225 to operate in the non-active state, the first polarization selective reflector 215 may reflect and converge an RHCP light, and transmit an LHCP light, and the second polarization selective reflector 225 may transmit both of an RHCP light and an LHCP light. As shown in FIG. 3A, the display element 204 may output a first image light 332L (e.g., representing a first virtual object). The first circular polarizer 213 may convert the image light 332L into an image light 333L propagating toward the first polarization selective reflector 215. The first polarization selective reflector 215 may substantially transmit the image light 333L as an image light 335L propagating toward the mirror 237. The mirror 237 may transmit a first portion of the image light 335L as an image light 336L propagating toward the second polarization selective reflector 225, and reflect a second portion of the image light 335L back to the first polarization selective reflector 215 as an image light 337R. The second polarization selective reflector 225 may transmit the image light 336L as an image light 338L propagating toward the second polarizer 223. The second polarizer 223 may block the image light 338L from being incident onto the transmissive lens 247, such that a ghost image may be suppressed.

The first polarization selective reflector 215 may reflect and converge, via diffraction, the image light 337R as an image light 339R toward the mirror 237. The mirror 237 may transmit a first portion of the image light 339R toward the second polarization selective reflector 225 as an image light 341R, and reflect a second portion of the image light 339R back to the first polarization selective reflector 215 as an LHCP image light (not shown). The second polarization selective reflector 225 may substantially transmit the image light 341R as an image light 343R propagating toward the second circular polarizer 223. The second circular polarizer 223 may transmit the image light 343R as an image light 345R propagating toward the transmissive lens 247. The transmissive lens 247 may focus the image light 345R into an image light 347L. The light intensity of the image light 347L may be about 25% of the light intensity of the image light 332L output from the display element 204. The optical path of an image light from being the image light 332L to being the image light 347L may be referred to as a first optical path.

The lens assembly 202 may image the display element 204 to a first image plane 305 having a first axial distance of dₐ₁ to the eye-box region 259, along the optical axis 220 of the lens assembly 202. Thus, the first virtual object displayed by the display element 204 (e.g., displayed on the display panel) may be imaged, by the lens assembly 202, to the first image plane 305 that is apart from the eye-box region 259 by the first axial distance of dₐ₁. In other words, the lens assembly 202 may form an image of the first virtual object at the first image plane 305. Accordingly, for the eyes 256 placed at the exit pupil 257 within the eye-box region 259, the accommodation distance of the first virtual object may be substantially equal to the first axial distance dₐ₁.

In FIG. 3B, as the controller 216 controls the first polarization selective reflector 215 to operate in the non-active state and the second polarization selective reflector 225 to operate in the active state, the first polarization selective reflector 215 may transmit both of an RHCP light and an LHCP light, and the second polarization selective reflector 225 may reflect and converge an LHCP light, and transmit an RHCP light. As shown in FIG. 3B, the display element 204 may output a second image light 362L (e.g., representing a second virtual object). The first circular polarizer 213 may convert the image light 362L into an image light 363L propagating toward the first polarization selective reflector 215. The first polarization selective reflector 215 may substantially transmit the image light 363L as an image light 365L propagating toward the mirror 237. The mirror 237 may transmit a first portion of the image light 365L as an image light 366L propagating toward the second polarization selective reflector 225, and reflect a second portion of the image light 365L back to the first polarization selective reflector 215 as an image light 367R. The first polarization selective reflector 215 may transmit the image light 367R as an image light 369R propagating toward the first polarizer 213. The first polarizer 213 may block the image light 369R from being incident onto the display element 204.

The second polarization selective reflector 225 may reflect and converge, via diffraction, the image light 366L as an image light 368L propagating toward the mirror 237. The mirror 237 may transmit a first portion of the image light 368L propagating toward the first polarization selective reflector 215 as an LHCP image light (not shown), and reflect a second portion of the image light 368L back to the second polarization selective reflector 225 as an image light 370R. The second polarization selective reflector 225 may substantially transmit the image light 370R as an image light 372R propagating toward the second circular polarizer 223. The second circular polarizer 223 may transmit the image light 372R as an image light 374R propagating toward the transmissive lens 247. The transmissive lens 247 may focus the image light 374R into an image light 376L. The light intensity of the image light 376L may be about 25% of the light intensity of the image light 362L output from the display element 204. The optical path of an image light from being the image light 363L to being the image light 376L may be referred to as a second optical path.

The lens assembly 202 may image the display element 204 to a second image plane 310 having a second axial distance of dₐ₂ to the eye-box region 259, along the optical axis 220 of the lens assembly 202. Thus, the second virtual object displayed by the display element 204 (e.g., displayed on the display panel) may be imaged by the lens assembly 2020 to be at the second image plane 310 that is spaced apart from the eye-box region 259 by the second axial distance of dₐ₂. In other words, the lens assembly 202 may form an image of the second virtual object at the second image plane 310. Accordingly, for the eyes 256 placed at the exit pupil 257 within the eye-box region 259, the accommodation distance of the second virtual object 308 may be substantially equal to the second axial distance dₐ₂.

Referring to FIGs. 3A and 3B, in some embodiments, the first axial distance dₐ₁ of the first image plane 305 may be determined, in part, by the respective optical powers of the first polarization selective reflector 215 and the transmissive lens 247, and the axial distances L1, L2, L3, L4, and/or L5. The second axial distance dₐ₂ of the second image plane 310 may be determined, in part, by the respective optical powers of the second polarization selective reflector 225 and the transmissive lens 247, and the axial distances L1, L2, L3, L4, and/or L5. Thus, through configuring the respective optical powers of the transmissive lens 247, the first polarization selective reflector 215, and the second polarization selective reflector 225, and the axial distances L1, L2, L3, L4, and/or L5 for the lens assembly 202, the second axial distance dₐ₂ may be configured to be different from the first axial distance dₐ₂.

When the axial distances L1, L2, L3, L4, and L5 are fixed, the first axial distance dₐ₁ of the first image plane 305 may be determined by the respective optical powers of the first polarization selective reflector 215 and the transmissive lens 247, and the second axial distance dₐ₂ of the second image plane 310 may be determined by the respective optical powers of the second polarization selective reflector 225 and the transmissive lens 247. Thus, through configuring the respective optical powers of the transmissive lens 247, the first polarization selective reflector 215, and the second polarization selective reflector 225, the second axial distance dₐ₂ may be configured to be different from the first axial distance dₐ₂.

For discussion purposes, FIGs. 3A and 3B show that the first axial distance dₐ₂ is greater than the second axial distance dₐ₂, and the first virtual object and the second virtual object displayed by the display element 204 are a distant virtual object and a close virtual object, respectively. In some embodiments, the first axial distance dₐ₂ may be less than the second axial distance dₐ₂, and the first virtual object and the second virtual object displayed by the display element 204 may be a close virtual object and a distant virtual object, respectively.

Thus, when each of the transmissive lens 247, the first polarization selective reflector 215, and the second polarization selective reflector 225 is presumed to have a fixed optical power, the lens assembly 202 may image the display element 204 to two different image planes having different axial distances to the eye-box region 259. In other words, the lens assembly 202 may form respective images of the first virtual object and the second virtual object displayed by the display element 204 (e.g., displayed on the display panel) at two different image planes that are spaced apart from the eye-box region 259 by different axial distances. Accordingly, for the eyes 256 placed at the exit pupil 257 within the eye-box region 259, the accommodation distance of the first virtual object and the second virtual object may be different from one another.

When the display element 204 displays the first virtual object and the second virtual object associated with different vergence distances (from the eyes 256 placed at the exit pupil 257 within the eye-box region 259), the respective optical powers of the transmissive lens 247, the first polarization selective reflector 215, and the second polarization selective reflector 225 may be configured, and the axial distances L1, L2, L3, L4, and/or L5 for the lens assembly 202 may be configured, such that the first axial distance dₐ₂ may be substantially equal to the vergence distance of the first virtual object, and the second axial distance dₐ₂ may be substantially equal to the vergence distance of the second virtual object. When the axial distances L1, L2, L3, L4, and L5 are fixed, the respective optical powers of the transmissive lens 247, the first polarization selective reflector 215, and the second polarization selective reflector 225 may be configured, such that the first axial distance dₐ₂ may be substantially equal to the vergence distance of the first virtual object, and the second axial distance dₐ₂ may be substantially equal to the vergence distance of the second virtual object. Thus, the vergence-accommodation conflict in the system 200 may be reduced, and the user experience may be enhanced.

In some embodiments, when at least one of the transmissive lens 247, the first polarization selective reflector 215, or the second polarization selective reflector 225 has an adjustable optical power, the lens assembly 202 may image the virtual content displayed by the display element 204 to more than two different image planes having different axial distances to the eye-box region 259. The accommodation capability of the lens assembly 202 may be further improved.

The controller 216 may be configured to control the operation states of the first polarization selective reflector 215 and the second polarization selective reflector 225 based on the vergence distance of a virtual object displayed by the display element 204. In addition, when at least one of the transmissive lens 247, the first polarization selective reflector 215, or the second polarization selective reflector 225 has an adjustable optical power, the controller 216 may also control the adjustable optical power of the respective elements based on the vergence distance of the virtual object displayed by the display element 204. In some embodiments, the controller 216 may obtain or determine the vergence distance of the virtual object displayed by the display element 204 based on eye tracking information provided by an eye tracking device (not shown).

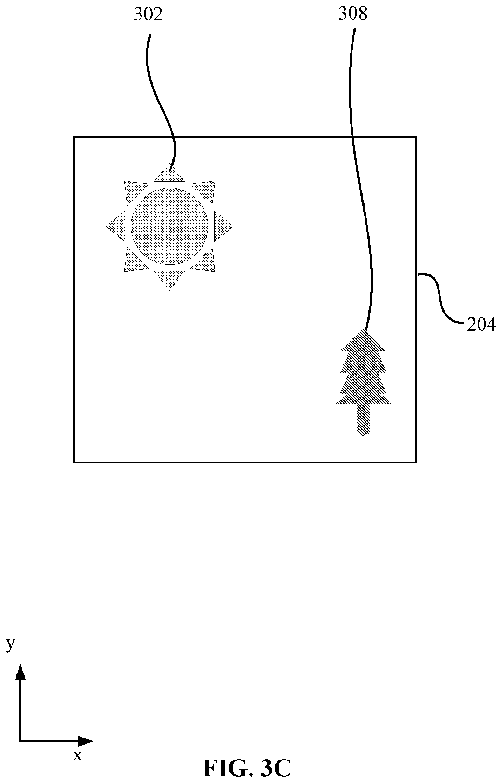

In some embodiments, the distant virtual object and the close virtual object may be displayed by the display element 204, during different sub-frames of a same display frame of the display element 204. FIG. 3C illustrates an x-y sectional view of a distant virtual object 302 and a close virtual object 308 displayed by the display element 204 in the system 200 shown in FIGs. 2-3B, according to an embodiment of the present disclosure. As shown in FIG. 3C, the display element 204 may display the distant virtual object 302 and the close virtual object 308 during a display frame of the display element 204. The display element 204 may render the close virtual object 308 to appear closer to the eyes 256 than the distant virtual object 302. Referring to FIGs. 3A-3C, the distant virtual object 302 may be the first virtual object represented by the image light 332L shown in FIG. 3A, and the close virtual object 308 may be the second virtual object represented by the image light 362L shown in FIG. 3B.

The display element 204 may be configured to display virtual objects associated with different vergence distances in a time sequential manner during the operation of the system 200. For example, the display element 204 may be configured to switch between displaying the distant virtual object 302 and displaying the close virtual object 308 at a predetermined frequency or predetermined frame rate. In some embodiments, the display frame of the display element 204 may include a first sub-frame and a second sub-frame, and the controller 216 may be configured to control the display element 204 to display the distant virtual object 302 and the close virtual object 308 during the respective sub-frames of the display frame of the display element 204. Compared to a conventional display element that simultaneously displays the distant virtual object 302 and the close virtual object 308 during the same sub-frame or the same display frame, the frame rate of the display element 204 may be at least two times of the frame rate of the conventional display element. In some embodiments, the frame rate of the display element 204 may be at least 60 Hz according to the frame rate of the human vision.

In addition, during the operation of the system 200, the controller 216 may be configured to control each of the first polarization selective reflector 215 and the second polarization selective reflector 225 to switch between the active state and the non-active state. In some embodiments, when the display frame of the display element 204 includes the first sub-frame and the second sub-frame, the controller 216 may be configured to control the first polarization selective reflector 215 and the second polarization selective reflector 225 to sequentially operate in the active state during the two sub-frames. The switching of the first polarization selective reflector 215 and the second polarization selective reflector 225 may be synchronized with the switching of the display element 204 (switching between displaying the distant virtual object 302 and displaying the close virtual object 308).

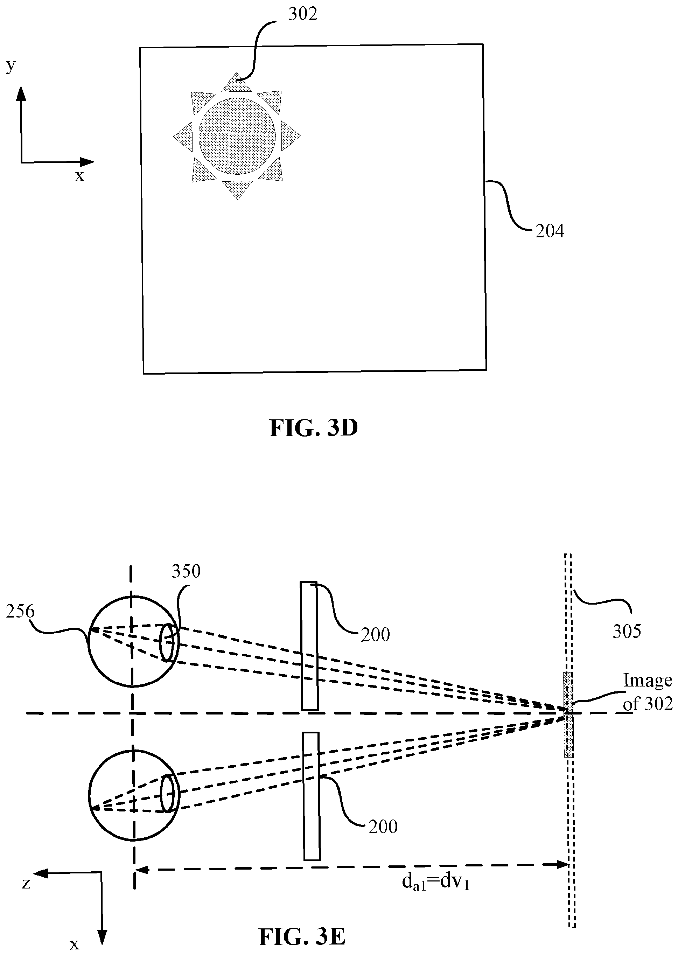

Referring to FIG. 3A and FIG. 3D, during the first sub-frame, the controller 216 may be configured to control the display element 204 to display only the distant virtual object 302 (e.g., at an upper-left side of the display element 204 as shown in FIG. 3D), and output the image light 332L representing the distant virtual object 302 (as shown in FIG. 3A). In some embodiments, based on the eye tracking information provided by the eye tracking device (not shown), the controller 216 may determine a vergence distance dᵥ₁ of the distant virtual object 302. Based on the determined eye tracking information, the controller 216 may control the first polarization selective reflector 215 to operate in the active state and the second polarization selective reflector 225 to operate in the non-active state. Referring to FIG. 3A and FIG. 3D, the lens assembly 202 may image the distant virtual object 302 to the first image plane 305 having the first axial distance of dₐ₁ to the eye-box region 259. In some embodiments, the first axial distance of dₐ₁ may be configured to be substantially equal to the vergence distance dᵥ₁ of the distant virtual object 302. Thus, the eyes 256 placed at the exit pupil 257 within the eye-box region 259 may accommodate for the distant virtual object 302.

FIG. 3E illustrates the accommodation of the eyes 256 of a user of the system 200 for the distant virtual object 302 during the first sub-frame of the display frame shown in FIG. 3A and FIG. 3D. For discussion purpose, FIG. 3E shows two systems 200 for two eyes 256 of the user. As shown in FIG. 3E, during the first sub-frame of the display frame, the display element 204 may render the distant virtual object 302 at the vergence distance dᵥ₁ for the eyes 256 placed at the exit pupil 257 within the eye-box region 259. The eyes 256 may be focused on an image of the distant virtual object 302 formed by the two lens assemblies 202 in the two systems 200. The image of the distant virtual object 302 may be located at the first image plane 305 having the first axial distance of dₐ₁ to the eye 256. The first axial distance of dₐ₁ may be configured to be substantially equal to the vergence distance dᵥ₁ of the distant virtual object 302. Thus, the eyes 256 positioned at the exit pupil 257 within the eye-box region 259 may accommodate for the distant virtual object 302.

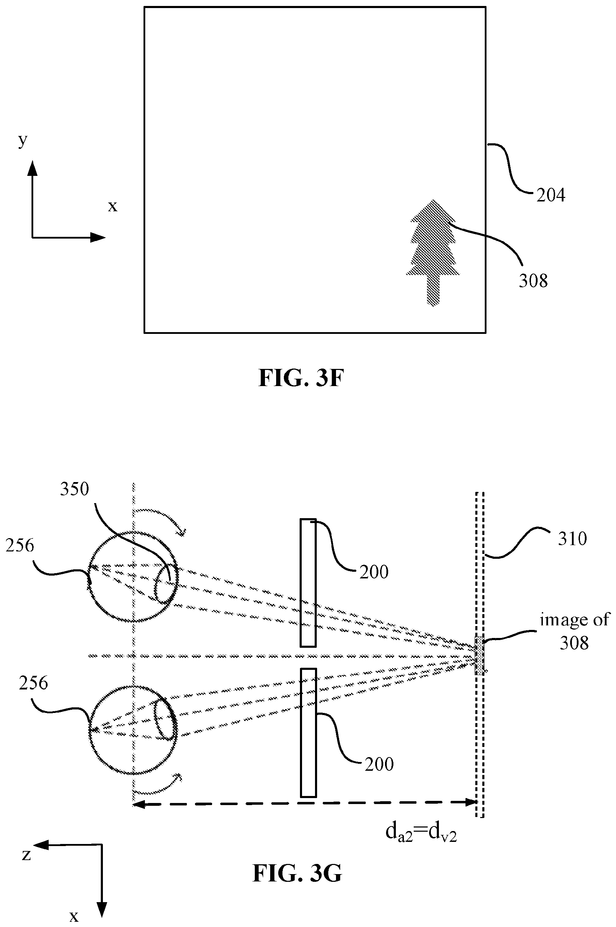

Referring to FIG. 3B and FIG. 3F, during the second sub-frame, the controller 216 may be configured to control the display element 204 to display only the close virtual object 308 (e.g., at a lower-right side of the display element 204 as shown in FIG. 3F), and output the image light 362L representing the close virtual object 308 (as shown in FIG. 3B). Based on the eye tracking information provided by the eye tracking device (not shown), the controller 216 may determine a vergence distance dᵥ₂ of the distant virtual object 302. Based on the determined eye tracking information, the controller 216 may control the first polarization selective reflector 215 to operate in the non-active state and the second polarization selective reflector 225 to operate in the active state. Referring to FIG. 3B and FIG. 3F, the lens assembly 202 may image the close virtual object 308 to the second image plane 310 having the second axial distance of dₐ₂ to the eye-box region 259. In some embodiments, the second axial distance of dₐ₂ may be configured to be substantially equal to the vergence distance dᵥ₂ of the close virtual object 308. Thus, the eyes 256 placed at the exit pupil 257 within the eye-box region 259 may accommodate for the close virtual object 308.

FIG. 3G illustrates the accommodation of the eyes 256 of the user of the system 200 for the close virtual object 308 during the second sub-frame of the display frame shown in FIG. 3B and FIG. 3F. For discussion purpose, FIG. 3G shows two systems 200 for two eyes 256 of the user. As shown in FIG. 3G, during the second sub-frame of the display frame, the display element 204 may render the close virtual object 308 at the vergence distance dᵥ₂ for the eyes 256 placed at the exit pupil 257 within the eye-box region 259. The eyes 256 may be focused on an image of the close virtual object 308 formed by the two lens assemblies 202 in the two systems 200. The image of the close virtual object 308 may be located at the second image plane 310 having the second axial distance of dₐ₂ to the eye 256. The second axial distance of dₐ₂ may be configured to be substantially equal to the vergence distance dᵥ₂ of the close virtual object 308.

Referring to FIG. 3E and FIG. 3G, when the display element 204 is switched from displaying the distant virtual object 302 to displaying the close virtual object 308, as the vergence distance dᵥ₂ of the close virtual object 308 is reduced compared to the vergence distance dᵥ₁ of the distant virtual object 302, the eyes 256 may rotate inwardly to stay verged on the close virtual object 308. In addition, as the second axial distance dₐ₂ of the second image plane 310 is reduced compared to the first axial distance dₐ₁ of the first image plane 305, each eye 256 may accommodate for the shorter distance of the second image plane 310 by changing the shape of crystalline lens 350 to increase the optical power or reduce the focal length. Thus, the eyes 256 may be adapted to focus on the close virtual object 308 from focusing on the distant virtual object 302.

Referring to FIGs. 3A-3G, the display element 204 may be configured to switch between displaying the distant virtual object 302 and displaying the close virtual object 308, and each of the first polarization selective reflector 215 and the second polarization selective reflector 225 may be configured to switch between operating in the active state and the non-active state. The first polarization selective reflector 215 and the second polarization selective reflector 225 may be configured to alternately operate in the active state and alternately operate in the non-active state. Thus, the lens assembly 202 may reduce the vergence-accommodation conflict in the system 200, and improve the user experience.

In some embodiments, at least one of the transmissive lens 247, the first polarization selective reflector 215, or the second polarization selective reflector 225 may have an adjustable optical power. For example, the transmissive lens 247 may be a variable transmissive lens having an adjustable optical power, such as a liquid lens, or a liquid crystal lens, etc. The first polarization selective reflector 215 and/or the second polarization selective reflector 225 may be a variable polarization selective lens having an adjustable optical power, such as a reflective PVH or CLC lens having an adjustable optical power. In such an embodiment, the lens assembly 202 may image the display element 204 to more than two different image planes having different axial distances to the eye-box region 259. In other words, the lens assembly 202 may provide more than two different accommodation distances for virtual objects displayed by the display element 204. Based on the vergence distance of a virtual object displayed by the display element 204, the controller 216 may control the optical powers of at least one of the transmissive lens 247, the first polarization selective reflector 215, or the second polarization selective reflector 225, and control the operation states of the first polarization selective reflector 215 and the second polarization selective reflector 225, such that the lens assembly 202 may image the virtual object displayed on the display element 204 to an image plane having an accommodation distance substantially the same as the vergence distance.

For discussion purposes, in the lens assembly 202 show in FIGs. 2-3B, at least one (e.g., each) of the first optical component 217 or the second optical component 227 may include a polarization selective reflector 215 or 225 configured with an optical power (or referred to as a reflective polarization selective lens 215 or 225). The polarization selective reflector 215 or 225 configured with an optical power may be a single element with both of the polarization selective reflection function and the lens function. In some embodiments, at least one (e.g., each) of the first optical component 217 or the second optical component 227 may include a polarization selective reflector 215 or 225 configured with zero optical power and an optical lens coupled with the first optical component 217 or the second optical component 227. The polarization selective reflector 215 or 225 configured with a zero optical power (i.e., no optical power) may provide a zero optical power to an input light independent of the operation state of the polarization selective reflector 215 or 225 and independent of the polarization of the input light. That is, the polarization selective reflector 215 or 225 configured with a zero optical power may provide a zero optical power to an input light regardless of whether the polarization selective reflector 215 or 225 operates at the active state or the non-active state.

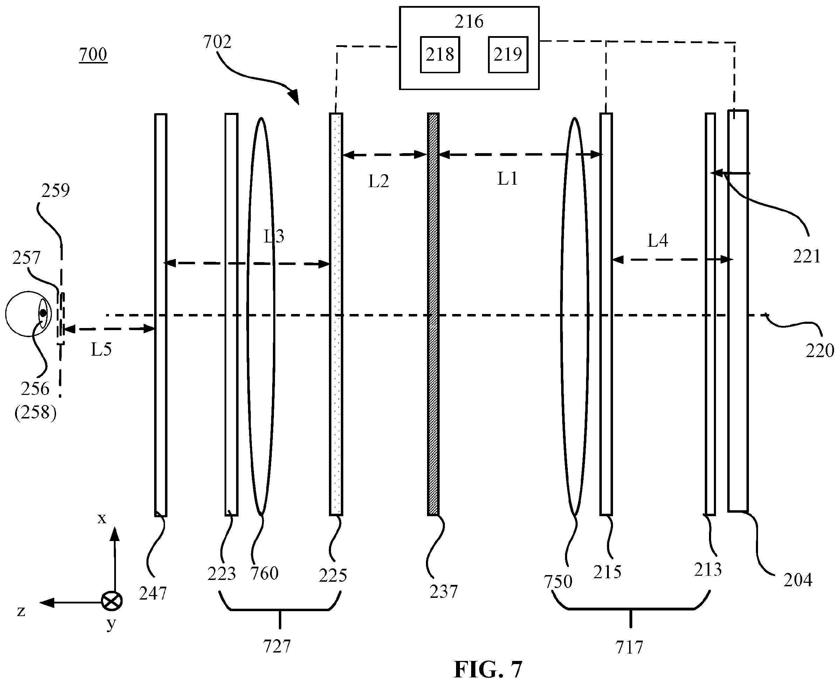

FIG. 7 schematically illustrates a diagram of a system 700, according to an embodiment of the present disclosure. In some embodiments, the system 700 may be a part of an NED. The system 700 includes elements, structures, and/or functions that are the same as or similar to those included in the system 200 shown in FIGs. 2-3B. The optical paths of the image lights 332L and 362L in the system 700 may be similar to that shown in FIGs. 3A-3G. Descriptions of the same or similar elements, structures, and/or functions can refer to the above descriptions rendered in connection with FIGs. 2-3G. As shown in FIG. 7, the system 700 includes the display element 204, a path-folding lens assembly 702 (also referred to as lens assembly 702) disposed between the display element 704 and the eye-box region 259, and the controller 216. The lens assembly 702 includes a first optical component 717, a second optical component 727, and the mirror 237 disposed between the first optical element 717 and the second optical element 727.

In the embodiment shown in FIG. 7, in at least one (e.g., each) of the first optical component 217 or the second optical component 227, the polarization selective reflector 215 or 225 may be configured with zero optical power, e.g., the polarization selective reflector 215 or 225 may be a PVH or CLC element with zero optical power. The polarization selective reflector 215 or 225 configured with a zero optical power (i.e., no optical power) may provide a zero optical power to an input light independent of the operation state of the polarization selective reflector 215 or 225 and independent of the polarization of the input light. That is, the polarization selective reflector 215 or 225 configured with a zero optical power may provide a zero optical power to the input light regardless of whether the polarization selective reflector 215 or 225 operates at the active state or the non-active state.

At least one (e.g., each) of the first optical component 217 or the second optical component 227 may also include an optical lens coupled with the polarization selective reflector 215 or 225. For example, the first optical component 217 may include a first optical lens 750 disposed between the first polarization selective reflector 215 and the first polarizer 213. The second optical component 227 may include a second optical lens 760 disposed between the second polarization selective reflector 225 and the first polarizer 223. The combination of the first polarization selective reflector 215 with zero optical power and the first optical lens 750 may function similarly to the first polarization selective reflector 215 with an optical power shown in FIGs. 2-3B. The combination of the second polarization selective reflector 215 with zero optical power and the second optical lens 760 may function similarly to the second polarization selective reflector 225 with an optical power shown in FIGs. 2-3B. The first optical lens 750 or the second optical lens 760 may be a suitable optical lens with a fixed optical power or an adjustable optical power. The first optical lens 750 or the second optical lens 760 may be polarization selective or polarization non-selective.

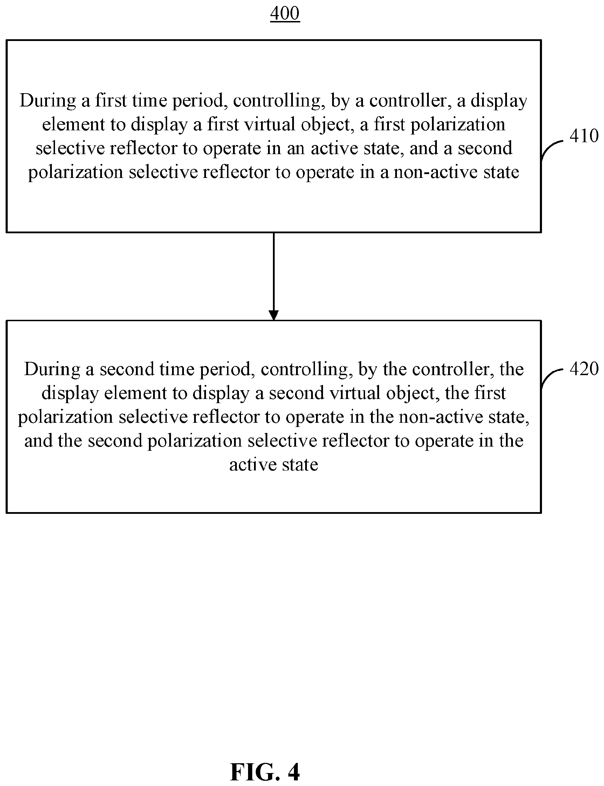

FIG. 4 is a flowchart illustrating a method 400 for mitigating vergence-accommodation conflict, according to an embodiment of the present disclosure. As shown in FIG. 4, the method 400 includes during a first time period, controlling, by a controller, a display element to display a first virtual object, a first polarization selective reflector to operate in an active state, and a second polarization selective reflector to operate in a non-active state (Step 410). In some embodiments, the first polarization selective reflector may be disposed at a first side of a polarization non-selective partial reflector facing the display element. In some embodiments, the second polarization selective reflector may be disposed at a second side of the polarization non-selective partial reflector. The method 400 also includes during a second time period, controlling, by the controller, the display element to display a second virtual object, the first polarization selective reflector to operate in the non-active state, and the second polarization selective reflector to operate in the active state (Step 420). Detailed descriptions and examples of the polarization non-selective partial reflector, and the first and second polarization selective reflectors refer to the above descriptions rendered in connection with FIGs. 2-3G.

The first and second polarization selective reflectors, and the polarization non-selective partial reflector disposed therebetween may form a lens assembly. In some embodiments, the first time period and the second time period may be a first sub-frame and a second sub-frame of a same display frame of the display element, respectively. In some embodiments, the first time period and the second time period may be two different display frames of the display element. In some embodiments, the first virtual object and the second virtual object may be associated with a first vergence distance, and a second vergence distance, respectively. The first vergence distance may be different from the second vergence distance.

In some embodiments, the method 400 may also include additional steps that are not shown in FIG. 4. In some embodiments, the method 400 may also include, during the first time period, forming, by the lens assembly, a first image of the first virtual object displayed on the display element at a first image plane associated with a first accommodation distance that is substantially equal to the first vergence distance. The method 400 may also include, during the second time period, forming, by the lens assembly, a second image of the second virtual object displayed on the display element to a second image plane associated with a second accommodation distance that is substantially equal to the second vergence distance.

The method 400 includes during the first time period, controlling, by the controller, the display element to output a first image light forming the first virtual object. The method 400 may also include during the first time period, controlling, by the controller, the first polarization selective reflector to operate in the active state to transmit the first image light having a first polarization toward the polarization non-selective partial reflector. The method 400 may also include during the first time period, reflecting, by the polarization non-selective partial reflector, a first portion of the first image light back to the first polarization selective reflector as a second image light having a second polarization that is orthogonal to the first polarization. The method 400 includes during the first time period, controlling, by the controller, the first polarization selective reflector to operate in the active state to reflect the second image light back to the polarization non-selective partial reflector as a third image light having the second polarization. The method 400 may also include during the first time period, transmitting, by the polarization non-selective partial reflector, a portion of the third image light as a fourth image light having the second polarization toward the second polarization selective reflector. The method 400 may also include during the first time period, controlling, by the controller, the second polarization selective reflector to operate in the non-active state to transmit the fourth image light having the second polarization.

The method 400 includes during the second time period, controlling, by the controller, the display element to output a fifth image light forming the second virtual object. The method 400 may also include during the second time period, controlling, by the controller, the first polarization selective reflector to operate in the non-active state to transmit the fifth image light having the first polarization toward the polarization non-selective partial reflector. The method 400 may also include during the second time period, transmitting, by the polarization non-selective partial reflector, a portion of the fifth image light as a sixth image light having the first polarization toward the second polarization selective reflector. The method 400 includes during the second time period, controlling, by the controller, the second polarization selective reflector to operate in the active state to reflect the sixth image light back to the polarization non-selective partial reflector as a seventh image light having the first polarization. The method 400 may also include during the second time period, reflecting, by the polarization non-selective partial reflector, a portion of the seventh image light back to the second polarization selective reflector as an eighth image light having the second polarization. The method 400 includes during the second time period, controlling, by the controller, the second polarization selective reflector to operate in the active state to transmit the eighth image light having the second polarization.

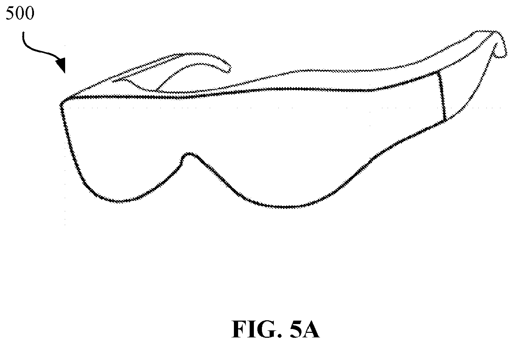

FIG. 5A illustrates a schematic diagram of an NED 500, according to an embodiment of the present disclosure. The NED 500 may be a system configured for VR, AR, and/or MR applications. In some embodiments, the NED 500 may be wearable on a head of a user (e.g., by having the form of spectacles or eyeglasses, as shown in FIG. 5A) or to be included as part of a helmet wearable by the user. In some embodiments, the NED 500 may be mountable to the head of the user, referred to as a head-mounted display. In some embodiments, the NED 500 may be configured for placement in proximity of an eye or eyes of the user at a fixed location in front of the eye(s), without being mounted to the head of the user.

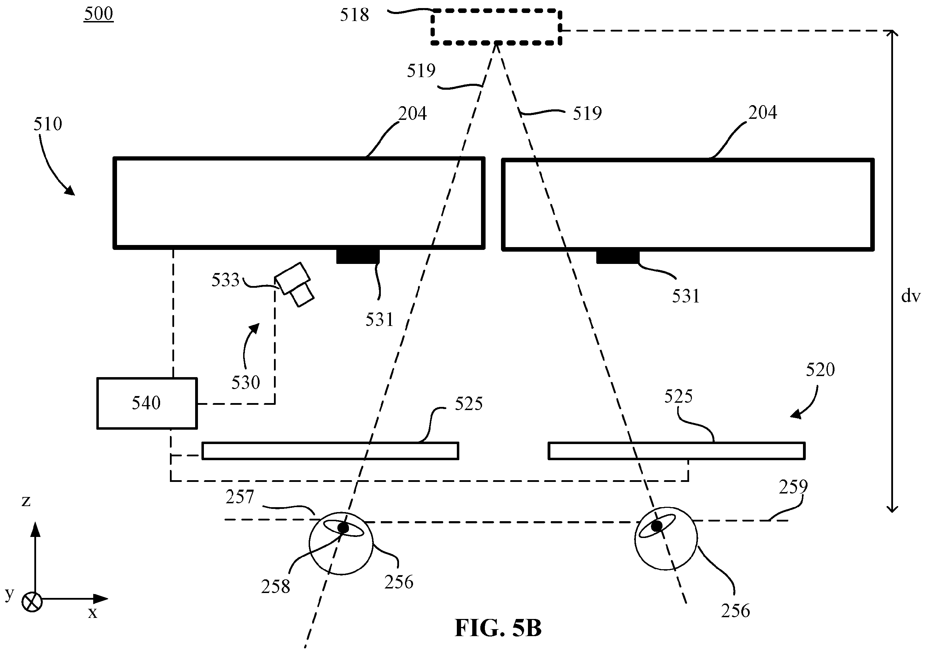

FIG. 5B schematically illustrates an x-y sectional view of the NED 500 shown in FIG. 5A, according to an embodiment of the present disclosure. The NED 500 may include a display device 510, a viewing optics assembly 520, an object tracking system 530, and a controller 540 (e.g., a controller similar to the controller 216). The display device 510 may display virtual (i.e., computer-generated) images to a user. In some embodiments, the display device 510 may include a single display element or multiple display elements 204. For discussion purposes, FIG. 5B shows two electronic displays as the display elements 204 for left and right eyes 256 of the user, respectively. The display element 204 may include a display panel (also referred to as 204 for discussion purposes).

The viewing optics assembly 520 may be arranged between the display device 510 and the eyes 256, and may be configured to guide an image light output from the display device 510 to the exit pupil 257 the eye-box region 259. The image light may represent a virtual object displayed on the display element 204. The exit pupil 257 may be a location where the eye pupil 258 of the eye 256 may be positioned in the eye-box region 259 of the system 500. The viewing optics assembly 520 may include two lens assemblies 525 for the left and right eyes 256, respectively. The lens assembly 525 may be an embodiment of the lens assembly disclosed herein, such as the lens assembly 202 shown in FIG. 2, FIG. 3A, and FIG. 3B, or the lens assembly 702 shown in FIG. 7, etc.

The object tracking system 530 may be an eye tracking system and/or face tracking system. The object tracking system 530 may include an infrared ("IR") light source 531 configured to emit an IR light to illuminate the eyes 256 and/or the face. The object tracking system 530 may also include an optical sensor 533, such as a camera, configured to receive the IR light reflected by each eye 256 and generate a tracking signal relating to the eye 256, such as an image of the eye 256. In some embodiments, the object tracking system 530 may also include an IR deflecting element (not shown) configured to deflect the IR light reflected by the eye 256 toward the optical sensor 533. The controller 540 may be communicatively coupled with the display device 510, the viewing optics assembly 520, and/or the object tracking system 530 to control the operations thereof.

In some embodiments, the lens assembly 525 may be configured to mitigate the accommodation-vergence conflict in the system 500. For example, the lens assembly 525 may be configured with a large aperture size, such as 50 mm, for a large field of view, such as 65 degrees with 20 mm eye relief distance, a large optical power for adapting human eye vergence accommodation, such as ± 2.0 Diopters, a fast switching speed at the milli-seconds level or tens of milliseconds level for adapting vergence-accommodation of human eyes, and a high image quality for meeting human eye acuity.

In some embodiments, the two display elements 204 may be synchronized to display respective virtual images including a same virtual object. The virtual objects may be located in different positions in the respective virtual images, or the respective virtual images may show different perspectives of the virtual object. Based on the eye tracking information provided by the eye tracking system 530, the controller 540 may determine a vergence depth (dv) of the gaze of the user that verges on a virtual object 518, based on the gaze point or an estimated intersection of gaze lines 519 determined by the object tracking system 530. As shown in FIG. 5B, the gaze lines 519 may converge or intersect at the distance dᵥ, where the virtual object 518 is located. The controller 540 may control the lens assemblies 525 to adjust the optical power (e.g., via controlling the operation states of the first polarization selective rotator 215 and the second polarization selective rotator 225) to provide an accommodation that matches the vergence depth (dv) associated with the virtual object 518, thereby reducing the accommodation-vergence conflict in the system 500. For example, the controller 540 may control the lens assembly 525 to provide an optical power corresponding to a focal plane or an image plane of the display element 204 that matches with the vergence depth (dv).

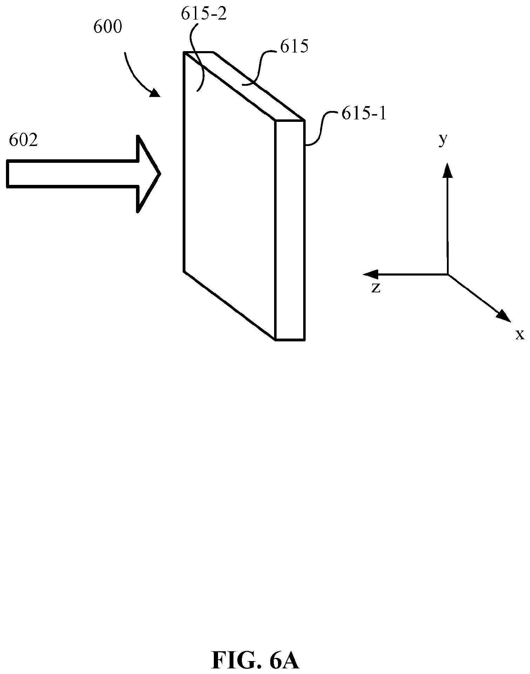

FIG. 6A illustrates a schematic three-dimensional ("3D") view of a polarization selective reflector 600 with a beam 602 incident onto the polarizing selective reflector 600 along a -z-axis, according to an embodiment of the present disclosure. The polarizing selective reflector 600 may be configured with an optical power. The polarization selective reflector 600 may be an embodiment of the polarization selective reflector 215 or 225 with the optical power (or reflective polarization selective lens 215 or 225) shown in FIGs. 2-3B. As shown in FIG. 6A, although the polarization selective reflector 600 is shown as a rectangular plate shape for illustrative purposes, the polarization selective reflector 600 may have a suitable shape, such as a circular shape. In some embodiments, one or both surfaces along the light propagating path of the beam 602 may have curved shapes. In some embodiments, the polarization selective reflector 600 may be fabricated based on a birefringent medium, e.g., liquid crystal ("LC") materials, which may have an intrinsic orientational order of optically anisotropic molecules that may be locally controlled during the fabrication process.

In some embodiments, the polarization selective reflector 600 may include a birefringent medium (e.g., an LC material) in a form of a layer, which may be referred to as a birefringent medium layer 615. The birefringent medium layer 615 may have a first surface 615-1 and an opposing second surface 615-2. The first surface 615-1 and the second surface 615-2 may be surfaces along the light propagating path of the incident beam 602. The birefringent medium layer 615 may include optically anisotropic molecules (e.g., LC molecules) configured with a 3D orientational pattern to provide a predetermined phase profile associated with a predetermined optical response.

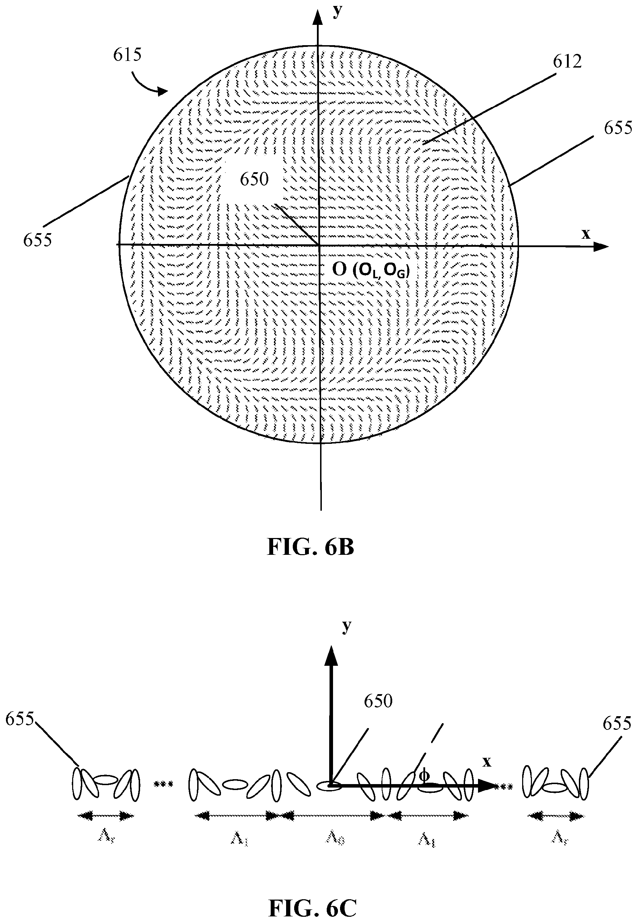

FIGs. 6B and 6C schematically illustrate x-y sectional views of a portion of the polarization selective reflector 600 shown in FIG. 6A, showing in-plane orientations of the optically anisotropic molecules 612 in the polarization selective reflector 600, according to various embodiments of the present disclosure. The in-plane orientations of the optically anisotropic molecules 612 in the polarization selective reflector 600 shown in FIGs. 6B and 6C are for illustrative purposes. In some embodiments, the optically anisotropic molecules 612 in the polarization selective reflector 600 may have other in-plane orientation patterns, and the polarization selective reflector 600 may function as a suitable reflective polarization selective lens, such as a reflective polarization selective spherical, aspherical, cylindrical, or freeform lens, etc.

For discussion purposes, rod-like LC molecules 612 are used as examples of the optically anisotropic molecules 612. The rod-like LC molecule 612 may have a longitudinal axis (or an axis in the length direction) and a lateral axis (or an axis in the width direction). The longitudinal axis of the LC molecule 612 may be referred to as a director of the LC molecule 612 or an LC director. An orientation of the LC director may determine a local optic axis orientation or an orientation of the optic axis at a local point of the birefringent medium layer 615. The term "optic axis" may refer to a direction in a crystal. A light propagating in the optic axis direction may not experience birefringence (or double refraction). An optic axis may be a direction rather than a single line: lights that are parallel with that direction may experience no birefringence. The local optic axis may refer to an optic axis within a predetermined region of a crystal. For illustrative purposes, the LC directors of the LC molecules 612 shown in FIGs. 6B and 6C are presumed to be within a film plane of the birefringent medium layer 615 with substantially small tilt angles with respect to the surface.

FIG. 6B schematically illustrates an x-y sectional view of a portion of the polarization selective reflector 600, showing an in-plane orientation pattern of the orientations of the LC directors (indicated by arrows 688 in FIG. 6B) of the LC molecules 612 within a film plane of the birefringent medium layer 615. The film plane may be parallel with at least one of the first surface 615-1 or the second surface 615-2. The film plane may be perpendicular to the thickness direction of the birefringent medium layer 615. FIG. 6C illustrates a section of an LC director field taken along an x-axis in the film plane of the birefringent medium layer 615.

FIG. 6B shows that the polarization selective reflector 600 has a circular shape. The orientations of the LC molecules 612 located within the film plane of the birefringent medium layer 615 may be configured with an in-plane orientation pattern having a varying pitch in at least two opposite in-plane directions from a lens center ("O") 650 to opposite lens peripheries 655. For example, the orientations of the LC directors of LC molecules 612 located in the film plane of the birefringent medium layer 615 may exhibit a continuous rotation in at least two opposite in-plane directions (e.g., a plurality of opposite radial directions) from the lens center 650 to the opposite lens peripheries 655 with a varying pitch. The orientations of the LC directors from the lens center 650 to the opposite lens peripheries 655 may exhibit a rotation in a same rotation direction (e.g., clockwise, or counter-clockwise). A pitch A of the in-plane orientation pattern may be defined as a distance in the in-plane direction (e.g., a radial direction) over which the orientations of the LC directors (or azimuthal angles ϕ of the LC molecules 612) change by a predetermined angle (e.g., 180°) from a predetermined initial state.

As shown in FIG. 6C, according to the LC director field along the x-axis direction, the pitch A may be a function of the distance from the lens center 650. The pitch A may monotonically decrease from the lens center 650 to the lens peripheries 655 in the at least two opposite in-plane directions (e.g., two opposite radial directions) in the x-y plane, e.g., Λ₀ > Λ₁ > ... > Λᵣ. Λ₀ is the pitch at a central region of the lens pattern, which may be the largest. The pitch Λᵣ is the pitch at a periphery region (e.g., periphery 655) of the lens pattern, which may be the smallest. In some embodiments, the azimuthal angle ϕ of the LC molecule 612 may change in proportional to the distance from the lens center 650 to a local point of the birefringent medium layer 615 at which the LC molecule 612 is located. In some embodiments, the in-plane orientation pattern of the orientations of the LC directors shown in FIGs. 6B and 6C may also be referred to as a lens pattern (e.g., a spherical lens pattern).

As shown in FIGs. 6B and 6C, a lens pattern center (O_{L}) and a geometry center (O_{G}) (e.g., a center of lens aperture) of the polarization selective reflector 600 functioning as on-axis focusing spherical lens may substantially overlap with one another, at the lens center ("O") 650. The lens pattern center (O_{L}) may be a center of the lens pattern of the polarization selective reflector 600 functioning as on-axis focusing spherical lens, and may also be a symmetry center of the lens pattern. The geometry center (O_{G}) may be defined as a center of a shape of the effective light receiving area (i.e., an aperture) of the polarization selective reflector 600 functioning as an on-axis focusing spherical lens.

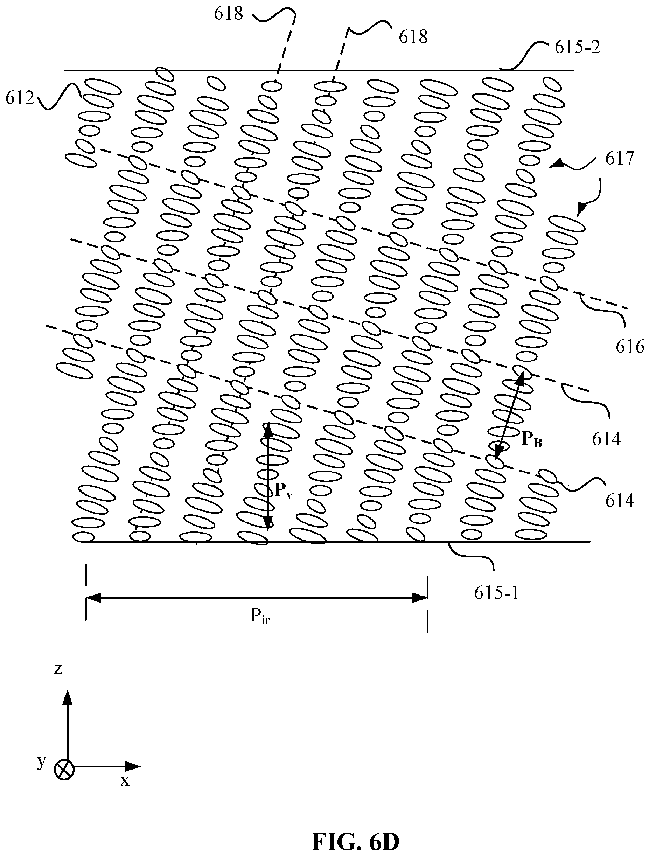

FIG. 6D schematically illustrates an y-z sectional views of a portion of the polarization selective reflector 600, showing out-of-plane orientations of the LC directors of the LC molecules 612 in the polarization selective reflector 600. In some embodiments, the out-of-plane direction may be in the thickness direction of the polarization selective reflector 600. As shown in FIG. 6D, within a volume of the birefringent medium layer 615, the LC molecules 612 may be arranged in a plurality of helical structures 617 with a plurality of helical axes 618 and a helical pitch Pₕ along the helical axes 618. The azimuthal angles of the LC molecules 612 arranged along a single helical structure 617 may continuously vary around the helical axis 618 in a predetermined rotation direction, e.g., clockwise direction or counter-clockwise direction. In other words, the orientations of the LC directors of the LC molecules 612 arranged along a single helical structure 617 may exhibit a continuous rotation around the helical axis 618 in a predetermined rotation direction. That is, the azimuthal angles associated of the LC directors may exhibit a continuous change around the helical axis in the predetermined rotation direction. Accordingly, the helical structure 617 may exhibit a handedness, e.g., right handedness or left handedness. The helical pitch Pₕ may be defined as a distance along the helical axis 618 over which the orientations of the LC directors exhibit a rotation around the helical axis 618 by 360°, or the azimuthal angles of the LC molecules vary by 360°.

As shown in FIG. 6D, the helical axes 618 of the helical structures 617 may be tilted with respect to the first surface 615-1 and/or the second surface 615-2 of the birefringent medium layer 615 (or with respect to the thickness direction of the birefringent medium layer 615). For example, the helical axes 618 of the helical structures 617 may have an acute angle or obtuse angle with respect to the first surface 615-1 and/or the second surface 615-2 of the birefringent medium layer 615. In some embodiments, the LC directors of the LC molecule 612 may be substantially orthogonal to the helical axes 618 (i.e., the tilt angle may be substantially zero degree). In some embodiments, the LC directors of the LC molecule 612 may be tilted with respect to the helical axes 618 at an acute angle.

The birefringent medium layer 615 may also have a vertical periodicity (or pitch) Pᵥ which may be defined as a distance along the thickness direction of the birefringent medium layer 615 over which the orientations of the LC directors of the LC molecules 612 exhibit a rotation around the helical axis 618 by 180° (or the azimuthal angles of the LC directors vary by 180°).

The LC molecules 612 from the plurality of helical structures 617 having a first same orientation (e.g., same tilt angle and azimuthal angle) may form a first series of parallel refractive index planes 614 periodically distributed within the volume of the birefringent medium layer 615. Although not labeled, the LC molecules 612 with a second same orientation (e.g., same tilt angle and azimuthal angle) different from the first same orientation may form a second series of parallel refractive index planes periodically distributed within the volume of the birefringent medium layer 615. Different series of parallel refractive index planes may be formed by the LC molecules 612 having different orientations. In the same series of parallel and periodically distributed refractive index planes 614, the LC molecules 612 may have the same orientation and the refractive index may be the same. Different series of refractive index planes 614 may correspond to different refractive indices. When the number of the refractive index planes 614 (or the thickness of the birefringent medium layer) increases to a sufficient value, Bragg diffraction may be established according to the principles of volume gratings. Thus, the periodically distributed refractive index planes 614 may also be referred to as Bragg planes 614. The refractive index planes 614 may be slanted with respect to the first surface 615-1 or the second surface 615-2. Within the birefringent medium layer 615, there may exist different series of Bragg planes. A distance (or a period) between adjacent Bragg planes 614 of the same series may be referred to as a Bragg period P_{B}. The different series of Bragg planes formed within the volume of the birefringent medium layer 615 may produce a varying refractive index profile that is periodically distributed in the volume of the birefringent medium layer 615. The birefringent medium layer 615 may diffract an input light satisfying a Bragg condition through Bragg diffraction.

The birefringent medium layer 615 may also include a plurality of LC molecule director planes (or molecule director planes) 616 arranged in parallel with one another within the volume of the birefringent medium layer 615. An LC molecule director plane (or an LC director plane) 616 may be a plane formed by or including the LC directors of the LC molecules 612. In the example shown in FIG. 6D, an angle θ (not shown) between the LC director plane 616 and the Bragg plane 614 may be substantially 0° or 180°. That is, the LC director plane 616 may be substantially parallel with the Bragg plane 614.

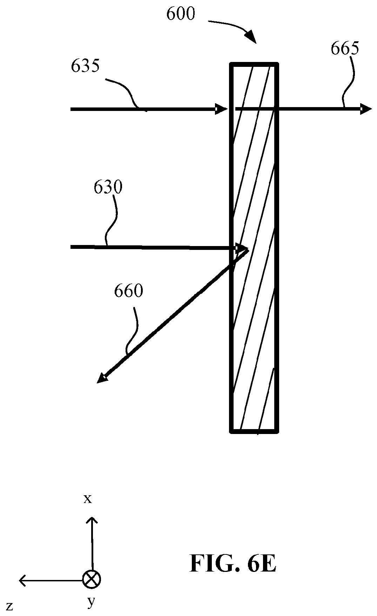

FIG. 6E schematically illustrates diffraction and transmission of the polarization selective reflector 600 shown in FIG. 6A, according to an embodiment of the present disclosure. The polarization selective reflector 600 may be configured to substantially backwardly diffract a circularly polarized beam or an elliptically polarized beam having a first handedness (e.g., a handedness that is the same as the handedness of the helical structure shown in FIG. 6D) as a diffracted beam (e.g., the 1^{st} diffracted beam), and substantially transmit (e.g., with negligible or zero diffraction) a circularly polarized beam or an elliptically polarized beam having a second handedness that is opposite to the first handedness as a transmitted beam. In some embodiments, the polarization selective reflector 600 may be configured to substantially maintain the handedness of the circularly polarized beam diffracted thereby and the handedness of the circularly polarized beam transmitted thereby. For example, the diffracted beam may be a circularly polarized beam with the first handedness, and the transmitted beam may be a circularly polarized beam with the second handedness substantially. For discussion purposes, FIG. 6E shows that the polarization selective reflector 600 is a right-handed reflective PVH, which is configured to substantially reflect and converge, via diffraction, an RHCP beam 630 as an RHCP beam 660, and substantially transmit (e.g., with negligible diffraction) an LHCP beam 635 as an LHCP beam 665. In some embodiments, the polarization selective reflector 600 may be a left-handed reflective PVH, which is configured to substantially reflect and converge, via diffraction, an LHCP beam as an LHCP beam, and substantially transmit (e.g., with negligible diffraction) an RHCP beam as an RHCP beam.

In some embodiments, the present disclosure provides a device. The device includes a display element, and a lens assembly coupled with the display element. The lens assembly includes a first polarization selective reflector and a second polarization selective reflector each configured to be switchable between operating in an active state and operating in a non-active state. The lens assembly includes a polarization non-selective partial reflector disposed between the first polarization selective reflector and the second polarization selective reflector. The lens assembly includes a controller configured to control, during a first time period, the display element to display a first virtual object, the first polarization selective reflector to operate in the active state, and the second polarization selective reflector to operate in the non-active state, and control, during a second time period, the display element to display a second virtual object, the first polarization selective reflector to operate in the non-active state, and the second polarization selective reflector to operate in the active state.

In some embodiments, the first time period and the second time period are a first sub-frame and a second sub-frame of a same display frame of the display element, respectively. In some embodiments, the first virtual object and the second virtual object are associated with a first vergence distance and a second vergence distance, respectively, the first vergence distance being different from the second vergence distance. In some embodiments, during the first time period, the lens assembly is configured to form a first image of the first virtual object displayed on the display element at a first image plane associated with a first accommodation distance; and during the second time period, the lens assembly is configured to form a second image of the second virtual object displayed on the display element at a second image plane associated with a second accommodation distance, the second accommodation distance being different from the first accommodation distance. In some embodiments, the first accommodation distance is substantially equal to the first vergence distance; and the second accommodation distance is substantially equal to the second vergence distance.

In some embodiments, at least one of the first polarization selective reflector or the second polarization selective reflector includes a reflective polarization volume hologram ("PVH") element configured with an optical power. In some embodiments, the first polarization selective reflector and the second polarization selective reflector are configured with at least one of different optical powers or different axial distances to the polarization non-selective partial reflector.

In some embodiments, the first polarization selective reflector operating in the active state is configured to reflect an input light having a first polarization, and transmit an input light having a second polarization that is orthogonal to the first polarization. In some embodiments, the second polarization selective reflector operating in the active state is configured to reflect an input light having the second polarization, and transmit an input light having the first polarization. In some embodiments, the first polarization selective reflector and the second polarization selective reflector operating in the non-active state are each configured to transmit an input light independent of a polarization of the input light.

In some embodiments, the lens assembly further comprises a first polarizer disposed between the first polarization selective reflector and the display element; and a second polarizer. The second polarization selective reflector is disposed between the polarization non-selective partial reflector and the second polarizer. The first polarizer and the second polarizer are configured to block input lights having orthogonal polarizations. In some embodiments, the lens assembly further comprises a transmissive lens configured to converge an image light received from the second polarization selective reflector. The second polarization selective reflector is disposed between the polarization non-selective partial reflector and the transmissive lens.

In some embodiments, during the first time period, the first polarization selective reflector operating in the active state is configured to transmit a first image light having a first polarization toward the polarization non-selective partial reflector, the first image light forming the first virtual object. In some embodiments, during the first time period, the polarization non-selective partial reflector is configured to reflect a first portion of the first image light back to the first polarization selective reflector as a second image light having a second polarization that is orthogonal to the first polarization. In some embodiments, during the first time period, the first polarization selective reflector operating in the active state is configured to reflect the second image light back to the polarization non-selective partial reflector as a third image light having the second polarization. In some embodiments, during the first time period, the polarization non-selective partial reflector is configured to transmit a portion of the third image light as a fourth image light having the second polarization toward the second polarization selective reflector. In some embodiments, during the first time period, the second polarization selective reflector operating in the non-active state is configured to transmit the fourth image light having the second polarization.

In some embodiments, during the second time period, the first polarization selective reflector operating in the non-active state is configured to transmit a fifth image light having the first polarization toward the polarization non-selective partial reflector, the fifth image light forming the second virtual object. In some embodiments, during the second time period, the polarization non-selective partial reflector is configured to transmit a portion of the fifth image light as a sixth image light having the first polarization toward the second polarization selective reflector. In some embodiments, during the second time period, the second polarization selective reflector operating in the active state is configured to reflect the sixth image light back to the polarization non-selective partial reflector as a seventh image light having the first polarization. In some embodiments, during the second time period, the polarization non-selective partial reflector is configured to reflect a portion of the seventh image light back to the second polarization selective reflector as an eighth image light having the second polarization. In some embodiments, during the second time period, the second polarization selective reflector operating in the active state is configured to transmit the eighth image light having the second polarization.

In some embodiments, the present disclosure provides a method. The method includes during a first time period, controlling, by a controller, a display element to display a first virtual object, a first polarization selective reflector disposed at a first side of a polarization non-selective partial reflector facing the display element to operate in an active state, and a second polarization selective reflector disposed at a second side of the polarization non-selective partial reflector to operate in a non-active state. The method includes during a second time period, controlling, by the controller, the display element to display a second virtual object, the first polarization selective reflector to operate in the non-active state, and the second polarization selective reflector to operate in the active state.

In some embodiments, the first time period and the second time period are a first sub-frame and a second sub-frame of a same display frame of the display element, respectively. In some embodiments, the first virtual object and the second virtual object are associated with a first vergence distance and a second vergence distance, respectively, and the first vergence distance is different from the second vergence distance. In some embodiments, the first polarization selective reflector, the second polarization selective reflector, and the polarization non-selective partial reflector disposed between the first polarization selective reflector and the second polarization selective reflector form a lens assembly. In some embodiments, the method further comprises during the first time period, forming, by the lens assembly, a first image of the first virtual object displayed on the display element at a first image plane associated with a first accommodation distance that is substantially equal to the first vergence distance; and during the second time period, forming, by the lens assembly, a second image of the second virtual object displayed on the display element at a second image plane associated with a second accommodation distance that is substantially equal to the second vergence distance.

In some embodiments, at least one of the first polarization selective reflector or the second polarization selective reflector includes a reflective polarization volume hologram ("PVH") element configured with an optical power. In some embodiments, the first polarization selective reflector and the second polarization selective reflector are configured with at least one of different optical powers or different axial distances to the polarization non-selective partial reflector.

In some embodiments, the method further comprises during the first time period, controlling, by the controller, the display element to output a first image light forming the first virtual object. In some embodiments, the method further comprises during the first time period, controlling, by the controller, the first polarization selective reflector to operate in the active state to transmit the first image light having a first polarization toward the polarization non-selective partial reflector. In some embodiments, the method further comprises during the first time period, reflecting, by the polarization non-selective partial reflector, a first portion of the first image light back to the first polarization selective reflector as a second image light having a second polarization that is orthogonal to the first polarization. In some embodiments, the method further comprises during the first time period, controlling, by the controller, the first polarization selective reflector to operate in the active state to reflect the second image light back to the polarization non-selective partial reflector as a third image light having the second polarization. In some embodiments, the method further comprises during the first time period, transmitting, by the polarization non-selective partial reflector, a portion of the third image light as a fourth image light having the second polarization toward the second polarization selective reflector. In some embodiments, the method further comprises during the first time period, controlling, by the controller, the second polarization selective reflector to operate in the non-active state to transmit the fourth image light.

In some embodiments, the method further comprises during the second time period, controlling, by the controller, the display element to output a fifth image light forming the second virtual object. In some embodiments, the method further comprises during the second time period, controlling, by the controller, the first polarization selective reflector to operate in the non-active state to transmit the fifth image light having the first polarization toward the polarization non-selective partial reflector. In some embodiments, the method further comprises during the second time period, transmitting, by the polarization non-selective partial reflector, a portion of the fifth image light as a sixth image light having the first polarization toward the second polarization selective reflector. In some embodiments, the method further comprises during the second time period, controlling, by the controller, the second polarization selective reflector to operate in the active state to reflect the sixth image light back to the polarization non-selective partial reflector as a seventh image light having the first polarization. In some embodiments, the method further comprises during the second time period, reflecting, by the polarization non-selective partial reflector, a portion of the seventh image light back to the second polarization selective reflector as an eighth image light having the second polarization. In some embodiments, the method further comprises during the second time period, controlling, by the controller, the second polarization selective reflector to operate in the active state to transmit the eighth image light.

The foregoing description of the embodiments of the present disclosure have been presented for the purpose of illustration. It is not intended to be exhaustive or to limit the disclosure to the precise forms disclosed. Persons skilled in the relevant art can appreciate that modifications and variations are possible in light of the above disclosure.

Embodiments of the present disclosure may also relate to an apparatus for performing the operations herein. This apparatus may be specially constructed for the specific purposes, and/or it may include a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. The non-transitory computer-readable storage medium can be a suitable medium that can store program codes, for example, a magnetic disk, an optical disk, a read-only memory ("ROM"), or a random access memory ("RAM"), an Electrically Programmable read only memory ("EPROM"), an Electrically Erasable Programmable read only memory ("EEPROM"), a register, a hard disk, a solid-state disk drive, a smart media card ("SMC"), a secure digital card ("SD"), a flash card, etc. Furthermore, computing systems described in the specification may include a single processor or may be architectures employing multiple processors for increased computing capability. The processor may be a central processing unit ("CPU"), a graphics processing unit ("GPU"), or another suitable processing device configured to process data and/or performing computation based on data. The processor may include both software and hardware components. For example, the processor may include a hardware component, such as an application-specific integrated circuit ("ASIC"), a programmable logic device ("PLD"), or a combination thereof. The PLD may be a complex programmable logic device ("CPLD"), a field-programmable gate array ("FPGA"), etc.

## Claims

1. A device, comprising:
a display element (204);
a lens assembly (202, 525, 702) coupled with the display element and comprising:
a first polarization selective reflector (215, 225) and a second polarization selective reflector each configured to be switchable between operating in an active state and operating in a non-active state; and
a polarization non-selective partial reflector disposed between the first polarization selective reflector and the second polarization selective reflector; and
a controller (216, 540) configured to:
control (410), during a first time period, the display element to display a first virtual object, the first polarization selective reflector to operate in the active state, and the second polarization selective reflector to operate in the non-active state; and
control (420), during a second time period, the display element to display a second virtual object, the first polarization selective reflector to operate in the non-active state, and the second polarization selective reflector to operate in the active state.

2. The device of claim 1, wherein the first time period and the second time period are a first sub-frame and a second sub-frame of a same display frame of the display element, respectively.

3. The device of claim 1 or 2, wherein the first virtual object and the second virtual object are associated with a first vergence distance and a second vergence distance, respectively, the first vergence distance being different from the second vergence distance.

4. The device of claim 3, wherein
during the first time period, the lens assembly is configured to form a first image of the first virtual object displayed on the display element at a first image plane associated with a first accommodation distance, and
during the second time period, the lens assembly is configured to form a second image of the second virtual object displayed on the display element at a second image plane associated with a second accommodation distance, the second accommodation distance being different from the first accommodation distance; preferably wherein:
the first accommodation distance is substantially equal to the first vergence distance, and
the second accommodation distance is substantially equal to the second vergence distance.

5. The device of any one of the preceding claims, wherein at least one of the first polarization selective reflector or the second polarization selective reflector includes a reflective polarization volume hologram, PVH, element or a cholesteric liquid crystal, CLC, element; and/or wherein the first polarization selective reflector and the second polarization selective reflector are configured with at least one of different optical powers or different axial distances to the polarization non-selective partial reflector.

6. The device of any one of the preceding claims, wherein
the first polarization selective reflector operating in the active state is configured to reflect an input light having a first polarization, and transmit an input light having a second polarization that is orthogonal to the first polarization, and
the second polarization selective reflector operating in the active state is configured to reflect an input light having the second polarization, and transmit an input light having the first polarization.

7. The device of any one of the preceding claims, wherein each of the first polarization selective reflector operating in the non-active state and the second polarization selective reflector operating in the non-active state is configured to transmit an input light independent of a polarization of the input light.

8. The device of any one of the preceding claims, wherein the lens assembly further comprises:
a first polarizer (213) disposed between the first polarization selective reflector and the display element; and
a second polarizer (223), the second polarization selective reflector being disposed between the polarization non-selective partial reflector and the second polarizer,
wherein the first polarizer and the second polarizer are configured to block input lights having orthogonal polarizations.

9. The device of any one of the preceding claims, wherein
the lens assembly further comprises a transmissive lens (247) configured to converge an image light received from the second polarization selective reflector, and
the second polarization selective reflector (225) is disposed between the polarization non-selective partial reflector and the transmissive lens.

10. The device of any one of the preceding claims, wherein during the first time period:
the first polarization selective reflector operating in the active state is configured to transmit a first image light having a first polarization toward the polarization non-selective partial reflector, the first image light forming the first virtual object;
the polarization non-selective partial reflector is configured to reflect a first portion of the first image light back to the first polarization selective reflector as a second image light having a second polarization that is orthogonal to the first polarization;
the first polarization selective reflector operating in the active state is configured to reflect the second image light back to the polarization non-selective partial reflector as a third image light having the second polarization;
the polarization non-selective partial reflector is configured to transmit a portion of the third image light as a fourth image light having the second polarization toward the second polarization selective reflector; and
the second polarization selective reflector operating in the non-active state is configured to transmit the fourth image light having the second polarization;
and preferably wherein during the second time period:
the first polarization selective reflector operating in the non-active state is configured to transmit a fifth image light having the first polarization toward the polarization non-selective partial reflector, the fifth image light forming the second virtual object;
the polarization non-selective partial reflector is configured to transmit a portion of the fifth image light as a sixth image light having the first polarization toward the second polarization selective reflector;
the second polarization selective reflector operating in the active state is configured to reflect the sixth image light back to the polarization non-selective partial reflector as a seventh image light having the first polarization;
the polarization non-selective partial reflector is configured to reflect a portion of the seventh image light back to the second polarization selective reflector as an eighth image light having the second polarization; and
the second polarization selective reflector operating in the active state is configured to transmit the eighth image light having the second polarization.

11. A method (400), comprising:
during a first time period (410), controlling, by a controller (216, 540), a display element (204) to display a first virtual object, a first polarization selective reflector (215, 225) disposed at a first side of a polarization non-selective partial reflector facing the display element to operate in an active state, and a second polarization selective reflector disposed at a second side of the polarization non-selective partial reflector to operate in a non-active state; and
during a second time period (420), controlling, by the controller, the display element to display a second virtual object, the first polarization selective reflector to operate in the non-active state, and the second polarization selective reflector to operate in the active state.

12. The method of claim 11, wherein the first time period and the second time period are a first sub-frame and a second sub-frame of a same display frame of the display element, respectively.

13. The method of claim 11 or 12, wherein
the first virtual object and the second virtual object are associated with a first vergence distance and a second vergence distance, respectively, and
the first vergence distance is different from the second vergence distance; and preferably
wherein a combination of the first polarization selective reflector, the second polarization selective reflector, and the polarization non-selective partial reflector disposed between the first polarization selective reflector and the second polarization selective reflector form a lens assembly (202, 525, 702), and
preferably wherein the method further comprises:
during the first time period, forming, by the lens assembly, a first image of the first virtual object displayed on the display element at a first image plane associated with a first accommodation distance that is substantially equal to the first vergence distance; and
during the second time period, forming, by the lens assembly, a second image of the second virtual object displayed on the display element at a second image plane associated with a second accommodation distance that is substantially equal to the second vergence distance.

14. The method of any one of claims 11 to 13, wherein at least one of the first polarization selective reflector or the second polarization selective reflector includes a reflective polarization volume hologram, PVH, element or a cholesteric liquid crystal, CLC, element; and/or wherein the first polarization selective reflector and the second polarization selective reflector are configured with at least one of different optical powers or different axial distances to the polarization non-selective partial reflector.

15. The method of any one of claims 11 to 14, further comprising:
during the first time period,
controlling, by the controller, the display element to output a first image light forming the first virtual object;
controlling, by the controller, the first polarization selective reflector to operate in the active state to transmit the first image light having a first polarization toward the polarization non-selective partial reflector;
reflecting, by the polarization non-selective partial reflector, a first portion of the first image light back to the first polarization selective reflector as a second image light having a second polarization that is orthogonal to the first polarization;
controlling, by the controller, the first polarization selective reflector to operate in the active state to reflect the second image light back to the polarization non-selective partial reflector as a third image light having the second polarization;
transmitting, by the polarization non-selective partial reflector, a portion of the third image light as a fourth image light having the second polarization toward the second polarization selective reflector; and
controlling, by the controller, the second polarization selective reflector to operate in the non-active state to transmit the fourth image light; and
during the second time period,
controlling, by the controller, the display element to output a fifth image light forming the second virtual object;
controlling, by the controller, the first polarization selective reflector to operate in the non-active state to transmit the fifth image light having the first polarization toward the polarization non-selective partial reflector;
transmitting, by the polarization non-selective partial reflector, a portion of the fifth image light as a sixth image light having the first polarization toward the second polarization selective reflector;
controlling, by the controller, the second polarization selective reflector to operate in the active state to reflect the sixth image light back to the polarization non-selective partial reflector as a seventh image light having the first polarization;
reflecting, by the polarization non-selective partial reflector, a portion of the seventh image light back to the second polarization selective reflector as an eighth image light having the second polarization; and
controlling, by the controller, the second polarization selective reflector to operate in the active state to transmit the eighth image light.

## Patentansprüche

1. Eine Vorrichtung, die Folgendes beinhaltet:
ein Anzeigeelement (204);
eine Linsenanordnung (202, 525, 702), die mit dem Anzeigeelement gekoppelt ist und Folgendes beinhaltet:
einen ersten polarisationsselektiven Reflektor (215, 225) und einen zweiten polarisationsselektiven Reflektor, die jeweils konfiguriert sind, um zwischen dem Betrieb in einem aktiven Zustand und dem Betrieb in einem nicht aktiven Zustand umschaltbar zu sein; und
einen polarisationsnichtselektiven Teilreflektor, der zwischen dem ersten polarisationsselektiven Reflektor und dem zweiten polarisationsselektiven Reflektor angeordnet ist; und
eine Steuerung (216, 540), die zu Folgendem konfiguriert ist:
Steuern (410), während eines ersten Zeitraums, des Anzeigeelements, um ein erstes virtuelles Objekt anzuzeigen, des ersten polarisationsselektiven Reflektors, um im aktiven Zustand zu arbeiten, und des zweiten polarisationsselektiven Reflektors, um im nicht aktiven Zustand zu arbeiten; und
Steuern (420), während eines zweiten Zeitraums, des Anzeigeelements, um ein zweites virtuelles Objekt anzuzeigen, des ersten polarisationsselektiven Reflektors, um im nicht aktiven Zustand zu arbeiten, und des zweiten polarisationsselektiven Reflektors, um im aktiven Zustand zu arbeiten.

2. Vorrichtung gemäß Anspruch 1, wobei der erste Zeitraum und der zweite Zeitraum ein erster Teilrahmen bzw. ein zweiter Teilrahmen eines gleichen Anzeigerahmens des Anzeigeelements sind.

3. Vorrichtung gemäß Anspruch 1 oder 2, wobei das erste virtuelle Objekt und das zweite virtuelle Objekt mit einem ersten Vergenzabstand bzw. einem zweiten Vergenzabstand assoziiert sind, wobei sich der erste Vergenzabstand vom zweiten Vergenzabstand unterscheidet.

4. Vorrichtung gemäß Anspruch 3, wobei
während des ersten Zeitraums die Linsenanordnung konfiguriert ist, um ein erstes Bild des ersten virtuellen Objekts zu bilden, das auf dem Anzeigeelement in einer ersten Bildebene angezeigt wird, die mit einem ersten Akkommodationsabstand assoziiert ist, und
während des zweiten Zeitraums die Linsenanordnung konfiguriert ist, um ein zweites Bild des zweiten virtuellen Objekts zu bilden, das auf dem Anzeigeelement in einer zweiten Bildebene angezeigt wird, die mit einem zweiten Akkommodationsabstand assoziiert ist, wobei sich der zweite Akkommodationsabstand vom ersten Akkommodationsabstand unterscheidet;
wobei vorzugsweise:
der erste Akkommodationsabstand im Wesentlichen gleich dem ersten Vergenzabstand ist, und
der zweite Akkommodationsabstand im Wesentlichen gleich dem zweiten Vergenzabstand ist.

5. Vorrichtung gemäß einem der vorhergehenden Ansprüche, wobei mindestens einer des ersten polarisationsselektiven Reflektors oder des zweiten polarisationsselektiven Reflektors ein reflektierendes Polarisationsvolumenhologrammelement, PVH-Element, oder ein cholesterisches Flüssigkristallelement, CLC-Element, umfasst; und/oder wobei der erste polarisationsselektive Reflektor und der zweite polarisationsselektive Reflektor mit mindestens einem von unterschiedlichen optischen Leistungen oder unterschiedlichen axialen Abständen zum polarisationsnichtselektiven Teilreflektor konfiguriert sind.

6. Vorrichtung gemäß einem der vorhergehenden Ansprüche, wobei
der erste polarisationsselektive Reflektor, der im aktiven Zustand arbeitet, konfiguriert ist, um ein Eingangslicht mit einer ersten Polarisation zu reflektieren und ein Eingangslicht mit einer zweiten Polarisation, die orthogonal zur ersten Polarisation ist, zu übertragen, und
der zweite polarisationsselektive Reflektor, der im aktiven Zustand arbeitet, konfiguriert ist, um ein Eingangslicht mit der zweiten Polarisation zu reflektieren und ein Eingangslicht mit der ersten Polarisation zu übertragen.

7. Vorrichtung gemäß einem der vorhergehenden Ansprüche, wobei jeder des ersten polarisationsselektiven Reflektors, der im nicht aktiven Zustand arbeitet, und des zweiten polarisationsselektiven Reflektors, der im nicht aktiven Zustand arbeitet, konfiguriert ist, um ein Eingangslicht unabhängig von einer Polarisation des Eingangslichts zu übertragen.

8. Vorrichtung gemäß einem der vorhergehenden Ansprüche, wobei die Linsenanordnung ferner Folgendes beinhaltet:
einen ersten Polarisator (213), der zwischen dem ersten polarisationsselektiven Reflektor und dem Anzeigeelement angeordnet ist; und
einen zweiten Polarisator (223), wobei der zweite polarisationsselektive Reflektor zwischen dem polarisationsnichtselektiven Teilreflektor und dem zweiten Polarisator angeordnet ist,
wobei der erste Polarisator und der zweite Polarisator konfiguriert sind, um Eingangslichter mit orthogonalen Polarisationen zu blockieren.

9. Vorrichtung gemäß einem der vorhergehenden Ansprüche, wobei
die Linsenanordnung ferner eine transmissive Linse (247) beinhaltet, die konfiguriert ist, um ein von dem zweiten polarisationsselektiven Reflektor empfangenes Bildlicht zu konvergieren, und
der zweite polarisationsselektive Reflektor (225) zwischen dem polarisationsnichtselektiven Teilreflektor und der transmissiven Linse angeordnet ist.

10. Vorrichtung gemäß einem der vorhergehenden Ansprüche, wobei während des ersten Zeitraums:
der erste polarisationsselektive Reflektor, der im aktiven Zustand arbeitet, konfiguriert ist, um ein erstes Bildlicht mit einer ersten Polarisation in Richtung des polarisationsnichtselektiven Teilreflektors zu übertragen, wobei das erste Bildlicht das erste virtuelle Objekt bildet;
der polarisationsnichtselektive Teilreflektor konfiguriert ist, um einen ersten Teil des ersten Bildlichtes zurück zu dem ersten polarisationsselektiven Reflektor als ein zweites Bildlicht mit einer zweiten Polarisation, die orthogonal zur ersten Polarisation ist, zu reflektieren;
der erste polarisationsselektive Reflektor, der im aktiven Zustand arbeitet, konfiguriert ist, um das zweite Bildlicht zurück zu dem polarisationsnichtselektiven Teilreflektor als ein drittes Bildlicht mit der zweiten Polarisation zu reflektieren;
der polarisationsnichtselektive Teilreflektor konfiguriert ist, um einen Teil des dritten Bildlichtes als ein viertes Bildlicht mit der zweiten Polarisation in Richtung des zweiten polarisationsselektiven Reflektors zu übertragen; und
der zweite polarisationsselektive Reflektor, der im nicht aktiven Zustand arbeitet, konfiguriert ist, um das vierte Bildlicht mit der zweiten Polarisation zu übertragen;
und wobei vorzugsweise während des zweiten Zeitraums:
der erste polarisationsselektive Reflektor, der im nicht aktiven Zustand arbeitet, konfiguriert ist, um ein fünftes Bildlicht mit der ersten Polarisation in Richtung des polarisationsnichtselektiven Teilreflektors zu übertragen, wobei das fünfte Bildlicht das zweite virtuelle Objekt bildet;
der polarisationsnichtselektive Teilreflektor konfiguriert ist, um einen Teil des fünften Bildlichtes als ein sechstes Bildlicht mit der ersten Polarisation in Richtung des zweiten polarisationsselektiven Reflektors zu übertragen;
der zweite polarisationsselektive Reflektor, der im aktiven Zustand arbeitet, konfiguriert ist, um das sechste Bildlicht zurück zu dem polarisationsnichtselektiven Teilreflektor als ein siebentes Bildlicht mit der ersten Polarisation zu reflektieren;
der polarisationsnichtselektive Teilreflektor konfiguriert ist, um einen Teil des siebenten Bildlichtes zurück zu dem zweiten polarisationsselektiven Reflektor als ein achtes Bildlicht mit der zweiten Polarisation zu reflektieren; und
der zweite polarisationsselektive Reflektor, der im aktiven Zustand arbeitet, konfiguriert ist, um das achte Bildlicht mit der zweiten Polarisation zu übertragen.

11. Ein Verfahren (400), das Folgendes beinhaltet:
während eines ersten Zeitraums (410), Steuern, durch eine Steuerung (216, 540), eines Anzeigeelements (204), um ein erstes virtuelles Objekt anzuzeigen, eines ersten polarisationsselektiven Reflektors (215, 225), der an einer ersten Seite eines polarisationsnichtselektiven Teilreflektors angeordnet ist, der dem Anzeigeelement zugewandt ist, um in einem aktiven Zustand zu arbeiten, und eines zweiten polarisationsselektiven Reflektors, der an einer zweiten Seite des polarisationsnichtselektiven Teilreflektors angeordnet ist, um in einem nicht aktiven Zustand zu arbeiten; und
während eines zweiten Zeitraums (420), Steuern, durch die Steuerung, des Anzeigeelements, um ein zweites virtuelles Objekt anzuzeigen, des ersten polarisationsselektiven Reflektors, um im nicht aktiven Zustand zu arbeiten, und des zweiten polarisationsselektiven Reflektors, um im aktiven Zustand zu arbeiten.

12. Verfahren gemäß Anspruch 11, wobei der erste Zeitraum und der zweite Zeitraum ein erster Teilrahmen bzw. ein zweiter Teilrahmen eines gleichen Anzeigerahmens des Anzeigeelements sind.

13. Verfahren gemäß Anspruch 11 oder 12, wobei
das erste virtuelle Objekt und das zweite virtuelle Objekt mit einem ersten Vergenzabstand bzw. einem zweiten Vergenzabstand assoziiert sind, und
sich der erste Vergenzabstand von dem zweiten Vergenzabstand unterscheidet; und vorzugsweise
wobei eine Kombination aus dem ersten polarisationsselektiven Reflektor, dem zweiten polarisationsselektiven Reflektor und dem polarisationsnichtselektiven Teilreflektor, der zwischen dem ersten polarisationsselektiven Reflektor und dem zweiten polarisationsselektiven Reflektor angeordnet ist, eine Linsenanordnung (202, 525, 702) bildet, und
wobei das Verfahren vorzugsweise ferner Folgendes beinhaltet:
während des ersten Zeitraums Bilden, durch die Linsenanordnung, eines ersten Bildes des ersten virtuellen Objekts, das auf dem Anzeigeelement in einer ersten Bildebene angezeigt wird, die mit einem ersten Akkommodationsabstand assoziiert ist, der im Wesentlichen gleich dem ersten Vergenzabstand ist; und
während des zweiten Zeitraums Bilden, durch die Linsenanordnung, eines zweiten Bildes des zweiten virtuellen Objekts, das auf dem Anzeigeelement in einer zweiten Bildebene angezeigt wird, die mit einem zweiten Akkommodationsabstand assoziiert ist, der im Wesentlichen gleich dem zweiten Vergenzabstand ist.

14. Verfahren gemäß einem der Ansprüche 11 bis 13, wobei mindestens einer des ersten polarisationsselektiven Reflektors oder des zweiten polarisationsselektiven Reflektors ein reflektierendes Polarisationsvolumenhologrammelement, PVH-Element, oder ein cholesterisches Flüssigkristallelement, CLC-Element, umfasst; und/oder wobei der erste polarisationsselektive Reflektor und der zweite polarisationsselektive Reflektor mit mindestens einem von unterschiedlichen optischen Leistungen oder unterschiedlichen axialen Abständen zum polarisationsnichtselektiven Teilreflektor konfiguriert sind.

15. Verfahren gemäß einem der Ansprüche 11 bis 14, das ferner Folgendes beinhaltet:
während des ersten Zeitraums,
Steuern, durch die Steuerung, des Anzeigeelements, um ein erstes Bildlicht auszugeben, das das erste virtuelle Objekt bildet;
Steuern, durch die Steuerung, des ersten polarisationsselektiven Reflektors, um im aktiven Zustand zu arbeiten, um das erste Bildlicht mit einer ersten Polarisation in Richtung des polarisationsnichtselektiven Teilreflektors zu übertragen;
Reflektieren, durch den polarisationsnichtselektiven Teilreflektor, eines ersten Teils des ersten Bildlichtes zurück zu dem ersten polarisationsselektiven Reflektor als ein zweites Bildlicht mit einer zweiten Polarisation, die orthogonal zur ersten Polarisation ist;
Steuern, durch die Steuerung, des ersten polarisationsselektiven Reflektors, um im aktiven Zustand zu arbeiten, um das zweite Bildlicht zurück zu dem polarisationsnichtselektiven Teilreflektor als ein drittes Bildlicht mit der zweiten Polarisation zu reflektieren;
Übertragen, durch den polarisationsnichtselektiven Teilreflektor, eines Teils des dritten Bildlichtes als ein viertes Bildlicht mit der zweiten Polarisation in Richtung des zweiten polarisationsselektiven Reflektors; und
Steuern, durch die Steuerung, des zweiten polarisationsselektiven Reflektors, um im nicht aktiven Zustand zu arbeiten, um das vierte Bildlicht zu übertragen; und während des zweiten Zeitraums,
Steuern, durch die Steuerung, des Anzeigeelements, um ein fünftes Bildlicht auszugeben, das das zweite virtuelle Objekt bildet;
Steuern, durch die Steuerung, des ersten polarisationsselektiven Reflektors, um im nicht aktiven Zustand zu arbeiten, um das fünfte Bildlicht mit der ersten Polarisation in Richtung des polarisationsnichtselektiven Teilreflektors zu übertragen;
Übertragen, durch den polarisationsnichtselektiven Teilreflektor, eines Teils des fünften Bildlichtes als ein sechstes Bildlicht mit der ersten Polarisation in Richtung des zweiten polarisationsselektiven Reflektors;
Steuern, durch die Steuerung, des zweiten polarisationsselektiven Reflektors, um im aktiven Zustand zu arbeiten, um das sechste Bildlicht zurück zu dem polarisationsnichtselektiven Teilreflektor als ein siebentes Bildlicht mit der ersten Polarisation zu reflektieren;
Reflektieren, durch den polarisationsnichtselektiven Teilreflektor, eines Teils des siebenten Bildlichtes zurück zu dem zweiten polarisationsselektiven Reflektor als ein achtes Bildlicht mit der zweiten Polarisation; und
Steuern, durch die Steuerung, des zweiten polarisationsselektiven Reflektors, um im aktiven Zustand zu arbeiten, um das achte Bildlicht zu übertragen.

## Revendications

1. Un dispositif, comprenant :
un élément d'affichage (204) ;
un ensemble lentille (202, 525, 702) couplé à l'élément d'affichage et comprenant :
un premier réflecteur sélectif de polarisation (215, 225) et un deuxième réflecteur sélectif de polarisation configurés chacun pour être commutables entre un fonctionnement dans un état actif et un fonctionnement dans un état non actif ; et
un réflecteur partiel non sélectif de polarisation disposé entre le premier réflecteur sélectif de polarisation et le deuxième réflecteur sélectif de polarisation ; et
un organe de commande (216, 540) configuré pour :
commander (410), pendant un premier laps de temps, l'élément d'affichage pour qu'il affiche un premier objet virtuel, le premier réflecteur sélectif de polarisation pour qu'il fonctionne dans l'état actif, et le deuxième réflecteur sélectif de polarisation pour qu'il fonctionne dans l'état non actif ; et
commander (420), pendant un deuxième laps de temps, l'élément d'affichage pour qu'il affiche un deuxième objet virtuel, le premier réflecteur sélectif de polarisation pour qu'il fonctionne dans l'état non actif, et le deuxième réflecteur sélectif de polarisation pour qu'il fonctionne dans l'état actif.

2. Le dispositif de la revendication 1, dans lequel le premier laps de temps et le deuxième laps de temps sont un premier sous-cadre et un deuxième sous-cadre d'un même cadre d'affichage de l'élément d'affichage, respectivement.

3. Le dispositif de la revendication 1 ou de la revendication 2, dans lequel le premier objet virtuel et le deuxième objet virtuel sont associés à une première distance de vergence et à une deuxième distance de vergence, respectivement, la première distance de vergence étant différente de la deuxième distance de vergence.

4. Le dispositif de la revendication 3, dans lequel
pendant le premier laps de temps, l'ensemble lentille est configuré pour former une première image du premier objet virtuel affiché sur l'élément d'affichage au niveau d'un premier plan d'image associé à une première distance d'accommodation, et
pendant le deuxième laps de temps, l'ensemble lentille est configuré pour former une deuxième image du deuxième objet virtuel affiché sur l'élément d'affichage au niveau d'un deuxième plan d'image associé à une deuxième distance d'accommodation, la deuxième distance d'accommodation étant différente de la première distance d'accommodation ;
de préférence dans lequel :
la première distance d'accommodation est sensiblement égale à la première distance de vergence, et
la deuxième distance d'accommodation est sensiblement égale à la deuxième distance de vergence.

5. Le dispositif de l'une quelconque des revendications précédentes, dans lequel au moins un réflecteur parmi le premier réflecteur sélectif de polarisation ou le deuxième réflecteur sélectif de polarisation inclut un élément d'hologramme volumique de polarisation, PVH *(Polarization Volume Hologram),* ou un élément de cristal liquide cholestérique, CLC *(Cholesteric liquid Crystal*) ; et/ou dans lequel le premier réflecteur sélectif de polarisation et le deuxième réflecteur sélectif de polarisation sont configurés avec au moins une caractéristique parmi des puissances optiques différentes ou des distances axiales différentes par rapport au réflecteur partiel non sélectif de polarisation.

6. Le dispositif de l'une quelconque des revendications précédentes, dans lequel
le premier réflecteur sélectif de polarisation fonctionnant dans l'état actif est configuré pour réfléchir une lumière d'entrée présentant une première polarisation, et transmettre une lumière d'entrée présentant une deuxième polarisation qui est orthogonale à la première polarisation, et
le deuxième réflecteur sélectif de polarisation fonctionnant dans l'état actif est configuré pour réfléchir une lumière d'entrée présentant la deuxième polarisation, et transmettre une lumière d'entrée présentant la première polarisation.

7. Le dispositif de l'une quelconque des revendications précédentes, dans lequel chaque réflecteur parmi le premier réflecteur sélectif de polarisation fonctionnant dans l'état non actif et le deuxième réflecteur sélectif de polarisation fonctionnant dans l'état non actif est configuré pour transmettre une lumière d'entrée indépendante d'une polarisation de la lumière d'entrée.

8. Le dispositif de l'une quelconque des revendications précédentes, dans lequel l'ensemble lentille comprend en outre :
un premier polariseur (213) disposé entre le premier réflecteur sélectif de polarisation et l'élément d'affichage ; et
un deuxième polariseur (223), le deuxième réflecteur sélectif de polarisation étant disposé entre le réflecteur partiel non sélectif de polarisation et le deuxième polariseur, dans lequel le premier polariseur et le deuxième polariseur sont configurés pour bloquer des lumières d'entrée présentant des polarisations orthogonales.

9. Le dispositif de l'une quelconque des revendications précédentes, dans lequel
l'ensemble lentille comprend en outre une lentille transmissive (247) configurée pour faire converger une lumière d'image reçue en provenance du deuxième réflecteur sélectif de polarisation, et
le deuxième réflecteur sélectif de polarisation (225) est disposé entre le réflecteur partiel non sélectif de polarisation et la lentille transmissive.

10. Le dispositif de l'une quelconque des revendications précédentes, dans lequel pendant le premier laps de temps :
le premier réflecteur sélectif de polarisation fonctionnant dans l'état actif est configuré pour transmettre une première lumière d'image présentant une première polarisation vers le réflecteur partiel non sélectif de polarisation, la première lumière d'image formant le premier objet virtuel ;
le réflecteur partiel non sélectif de polarisation est configuré pour réfléchir une première portion de la première lumière d'image en retour vers le premier réflecteur sélectif de polarisation sous forme de deuxième lumière d'image présentant une deuxième polarisation qui est orthogonale à la première polarisation ;
le premier réflecteur sélectif de polarisation fonctionnant dans l'état actif est configuré pour réfléchir la deuxième lumière d'image en retour vers le réflecteur partiel non sélectif de polarisation sous forme de troisième lumière d'image présentant la deuxième polarisation ;
le réflecteur partiel non sélectif de polarisation est configuré pour transmettre une portion de la troisième lumière d'image sous forme de quatrième lumière d'image présentant la deuxième polarisation vers le deuxième réflecteur sélectif de polarisation ; et
le deuxième réflecteur sélectif de polarisation fonctionnant dans l'état non actif est configuré pour transmettre la quatrième lumière d'image présentant la deuxième polarisation ;
et de préférence dans lequel pendant le deuxième laps de temps :
le premier réflecteur sélectif de polarisation fonctionnant dans l'état non actif est configuré pour transmettre une cinquième lumière d'image présentant la première polarisation vers le réflecteur partiel non sélectif de polarisation, la cinquième lumière d'image formant le deuxième objet virtuel ;
le réflecteur partiel non sélectif de polarisation est configuré pour transmettre une portion de la cinquième lumière d'image sous forme de sixième lumière d'image présentant la première polarisation vers le deuxième réflecteur sélectif de polarisation ;
le deuxième réflecteur sélectif de polarisation fonctionnant dans l'état actif est configuré pour réfléchir la sixième lumière d'image en retour vers le réflecteur partiel non sélectif de polarisation sous forme de septième lumière d'image présentant la première polarisation ;
le réflecteur partiel non sélectif de polarisation est configuré pour réfléchir une portion de la septième lumière d'image en retour vers le deuxième réflecteur sélectif de polarisation sous forme de huitième lumière d'image présentant la deuxième polarisation ; et
le deuxième réflecteur sélectif de polarisation fonctionnant dans l'état actif est configuré pour transmettre la huitième lumière d'image présentant la deuxième polarisation.

11. Un procédé (400), comprenant :
pendant un premier laps de temps (410), le fait de commander, par un organe de commande (216, 540), un élément d'affichage (204) pour qu'il affiche un premier objet virtuel, un premier réflecteur sélectif de polarisation (215, 225) disposé au niveau d'un premier côté d'un réflecteur partiel non sélectif de polarisation faisant face à l'élément d'affichage pour qu'il fonctionne dans un état actif, et un deuxième réflecteur sélectif de polarisation disposé au niveau d'un deuxième côté du réflecteur partiel non sélectif de polarisation pour qu'il fonctionne dans un état non actif ; et
pendant un deuxième laps de temps (420), le fait de commander, par l'organe de commande, l'élément d'affichage pour qu'il affiche un deuxième objet virtuel, le premier réflecteur sélectif de polarisation pour qu'il fonctionne dans l'état non actif, et le deuxième réflecteur sélectif de polarisation pour qu'il fonctionne dans l'état actif.

12. Le procédé de la revendication 11, dans lequel le premier laps de temps et le deuxième laps de temps sont un premier sous-cadre et un deuxième sous-cadre d'un même cadre d'affichage de l'élément d'affichage, respectivement.

13. Le procédé de la revendication 11 ou de la revendication 12, dans lequel
le premier objet virtuel et le deuxième objet virtuel sont associés à une première distance de vergence et à une deuxième distance de vergence, respectivement, et
la première distance de vergence est différente de la deuxième distance de vergence ; et de préférence
dans lequel une combinaison du premier réflecteur sélectif de polarisation, du deuxième réflecteur sélectif de polarisation, et du réflecteur partiel non sélectif de polarisation disposé entre le premier réflecteur sélectif de polarisation et le deuxième réflecteur sélectif de polarisation forme un ensemble lentille (202, 525, 702), et de préférence le procédé comprenant en outre :
pendant le premier laps de temps, la formation, par l'ensemble lentille, d'une première image du premier objet virtuel affiché sur l'élément d'affichage au niveau d'un premier plan d'image associé à une première distance d'accommodation qui est sensiblement égale à la première distance de vergence ; et
pendant le deuxième laps de temps, la formation, par l'ensemble lentille, d'une deuxième image du deuxième objet virtuel affiché sur l'élément d'affichage au niveau d'un deuxième plan d'image associé à une deuxième distance d'accommodation qui est sensiblement égale à la deuxième distance de vergence.

14. Le procédé de l'une quelconque des revendications 11 à 13, dans lequel au moins un réflecteur parmi le premier réflecteur sélectif de polarisation ou le deuxième réflecteur sélectif de polarisation inclut un élément d'hologramme volumique de polarisation, PVH, ou un élément de cristal liquide cholestérique, CLC ; et/ou dans lequel le premier réflecteur sélectif de polarisation et le deuxième réflecteur sélectif de polarisation sont configurés avec au moins une caractéristique parmi des puissances optiques différentes ou des distances axiales différentes par rapport au réflecteur partiel non sélectif de polarisation.

15. Le procédé de l'une quelconque des revendications 11 à 14, comprenant en outre :
pendant le premier laps de temps,
le fait de commander, par l'organe de commande, l'élément d'affichage pour qu'il produise en sortie une première lumière d'image formant le premier objet virtuel ;
le fait de commander, par l'organe de commande, le premier réflecteur sélectif de polarisation pour qu'il fonctionne dans l'état actif afin de transmettre la première lumière d'image présentant une première polarisation vers le réflecteur partiel non sélectif de polarisation ;
le fait de réfléchir, par le réflecteur partiel non sélectif de polarisation, une première portion de la première lumière d'image en retour vers le premier réflecteur sélectif de polarisation sous forme de deuxième lumière d'image présentant une deuxième polarisation qui est orthogonale à la première polarisation ;
le fait de commander, par l'organe de commande, le premier réflecteur sélectif de polarisation pour qu'il fonctionne dans l'état actif afin de réfléchir la deuxième lumière d'image en retour vers le réflecteur partiel non sélectif de polarisation sous forme de troisième lumière d'image présentant la deuxième polarisation ;
le fait de transmettre, par le réflecteur partiel non sélectif de polarisation, une portion de la troisième lumière d'image sous forme de quatrième lumière d'image présentant la deuxième polarisation vers le deuxième réflecteur sélectif de polarisation ; et
le fait de commander, par l'organe de commande, le deuxième réflecteur sélectif de polarisation pour qu'il fonctionne dans l'état non actif afin de transmettre la quatrième lumière d'image ; et
pendant le deuxième laps de temps,
le fait de commander, par l'organe de commande, l'élément d'affichage pour qu'il produise en sortie une cinquième lumière d'image formant le deuxième objet virtuel ;
le fait de commander, par l'organe de commande, le premier réflecteur sélectif de polarisation pour qu'il fonctionne dans l'état non actif afin de transmettre la cinquième lumière d'image présentant la première polarisation vers le réflecteur partiel non sélectif de polarisation ;
le fait de transmettre, par le réflecteur partiel non sélectif de polarisation, une portion de la cinquième lumière d'image sous forme de sixième lumière d'image présentant la première polarisation vers le deuxième réflecteur sélectif de polarisation ;
le fait de commander, par l'organe de commande, le deuxième réflecteur sélectif de polarisation pour qu'il fonctionne dans l'état actif afin de réfléchir la sixième lumière d'image en retour vers le réflecteur partiel non sélectif de polarisation sous forme de septième lumière d'image présentant la première polarisation ;
le fait de réfléchir, par le réflecteur partiel non sélectif de polarisation, une portion de la septième lumière d'image en retour vers le deuxième réflecteur sélectif de polarisation sous forme de huitième lumière d'image présentant la deuxième polarisation ; et
le fait de commander, par l'organe de commande, le deuxième réflecteur sélectif de polarisation pour qu'il fonctionne dans l'état actif afin de transmettre la huitième lumière d'image.
